# EUROPÄISCHE PATENTSCHRIFT

(11) **EP 4 094 133 B1**
(45) Veröffentlichungstag und Bekanntmachung des Hinweises auf die Patenterteilung: **28.05.2025**
(21) Anmeldenummer: 21700561.0
(22) Anmeldetag: 13.01.2021
(51) Int. Cl.: G05D 1/00

(54) **LAGERUNGSVERFAHREN SOWIE HIERFÜR GEEIGNETES FLÄCHENLAGER**
STORAGE METHODS AND SUITABLE AREA WAREHOUSE
PROCÉDURES DE STOCKAGE ET STOCKAGE ADAPTÉ

(30) Priorität: 24.01.2020 DE 102020101689
(43) Veröffentlichungstag der Anmeldung: 30.11.2022
(73) Patentinhaber: Telejet Kommunikations GmbH, 65779 Kelkheim (DE)
(72) Erfinder: JESCHKE, Klaus, 65779 Kelkheim (DE)
(74) Vertreter: Weickmann & Weickmann PartmbB
(86) Internationale Anmeldenummer: PCT/EP2021/050565
(87) Internationale Veröffentlichungsnummer: WO 2021/148284

(56) Entgegenhaltungen:
- US-A1- 2007 027 581
- US-A1- 2012 259 482
- US-A1- 2016 145 043
- US-A1- 2019 333 012

## Beschreibung

### I. Anwendungsgebiet

Die Erfindung betrifft ein Lagerungsverfahren für ein Flächenlager, auf dessen Fahrflächen einerseits autonom und mannlos fahrende Traktoren und andererseits Gespanne mit an einem Traktor angekuppeltem Anhänger fahren.

Die mit einem oder mehreren Produkten beladenen Anhänger werten in einem Abstellbereich des Lagers abgestellt und dadurch das Produkt eingelagert. Die Lagerflächen innerhalb der Abstellbereiche, auf denen ein Anhänger abgestellt wird, sind dabei virtuell vordefiniert, jedoch nicht körperlich voneinander abgetrennt. Im Gegenteil sollte die Fahrfläche von möglichst wenigen Hindernissen unterbrochen sein.

### II. Technischer Hintergrund

Derartige Flächenlager mit autonom fahrenden Traktoren sind in der Industrie bekannt.

Dabei werden die Anhänger mit den Produkten beispielsweise innerhalb einer Halle in dafür vorgesehenen Abstellbereichen abgestellt und bei Bedarf von einem Traktor angefahren, automatisch angekuppelt und zu einer von der Zentralsteuerung vorgegebenen Bedarfsstelle gebracht, wobei den konkreten Weg meist die Onbord-Steuerung des Traktors selbst sucht.

Auf der anderen Seite sind Lager mit einem Lagerregal aus mehreren übereinander beabstandeten Etagen bekannt, in denen die Produkte oder mit Produkten beladenen Behälter eingelagert werden.

Bei einem typischen Hochregallager fährt dabei ein sogenannten Regalbediengerät in den Gassen zwischen den Lagerregalen und lagert diese Behälter automatisch im Lagerregal ein oder aus diesem aus.

Falls ein Flächenlager mit einer großen Anzahl von autonom und auf der Fahrfläche frei verfahrenden Traktoren ebenfalls mehrere Etagen umfassen soll, bedeutet dies zum einen erheblichen zusätzlichen Steuerungsaufwand sowohl für die Zentralsteuerung als auch für die Onbord-Steuerung in den einzelnen Traktoren und darüber hinaus ist eine Höhen-Transfervorrichtung notwendig, damit ein Traktor oder ein Gespann aus Traktor und Anhänger von einer Etage zu einer anderen gelangen kann.

Eine wichtige Rolle spielt dabei das von den Traktoren verwendete Navigationssystem.

Ein sehr kostengünstiges Navigationssystem, welches auch in einem Flächenlager mit mehreren Etagen problemlos eingesetzt und auch nachgerüstet werden kann, umfasst optisch abtastbare Navigations-Markierungen, beispielsweise Barcodes oder Pixel-Codes, auf der Fahrfläche, anhand derer sich die Traktoren mit ihrer gegen den Boden gerichteten , insbesondere nur mono-fokalen, Bodenkamera orientieren können. Aus Kostengründen werden dabei Regalböden verwendet, die, vorzugsweise alle, die gleiche Bedruckung mit Navigations-Markierungen aufweisen. Die Regalböden können nach der Montage einen Versatz zueinander aufweisen.

Analog können die Navigations-Markierungen natürlich auch an der Decke oberhalb der Fahrfläche, also in aller Regel an der Unterseite des Regalbodens der darüber liegenden Etage, angeordnet sein und der Traktor verfügt zum Detektieren über eine nach oben gerichtete Dachkamera.

Damit der Traktor mittels eines einzigen Bildes seiner Kamera eindeutig die Position und Winkellage des Traktors auf dem entsprechenden Regalboden, auf der er fährt, bestimmen kann, sollten - auch bei der vorliegenden Erfindung - die Navigations-Markierungen in Relation zum detektierbaren Sichtfeld der Kamera entsprechend klein und entsprechend verteilt sein, sodass beispielsweise in einem einzigen Bild der Kamera unabhängig von der Position des Traktors auf der Fahrfläche immer mindestens eine Navigation-Markierung vollständig enthalten ist. Deshalb sollte die Oberseite oder Unterseite des Regalbodens im Wesentlichen vollständig mit solchen Navigations-Markierungen bedeckt sein. Vorzugsweise ist jede der vielen verschiedenen Navigations-Markierungen auf einem Regalboden nur einmal vorhanden.

Ein weiteres Problem sind die In den Etagen-Fahrflächen immer vorhandenen Tragsäulen des Tragwerks, von dem die Etagen, insbesondere die Regalböden, getragen werden und die auf der Fahrfläche der einzelnen Etagen Hindernisse darstellen und auch eine effiziente Ausnutzung der vorhandenen Fläche als Abstellbereiche für Anhänger behindern können.

### III. Darstellung der Erfindung

### a) Technische Aufgabe

Es ist dabei die Aufgabe gemäß der Erfindung, ein Lagerungsverfahren für ein solches Flächen-Lager sowie ein hierfür geeignetes Flächen-Lager zur Verfügung zu stellen, welches eine hohe Effizienz auch hinsichtlich der Flächen-Nutzung bietet und negative Betriebsbeeinflussungen aufgrund nicht vermeidbarer konstruktiver Details des Flächen-Lagers zu minimieren hilft. Hierbei ist ein Verfahren gemäß dem Oberbegriff des Anspruchs 1 bzw. eine Vorrichtung gemäß dem Oberbegriff des Anspruchs 12 aus der US 2012/259482 A1 bekannt.

### b) Lösung der Aufgabe

Diese Aufgabe wird durch die Merkmale der Ansprüche 1 und 12 gelöst. Vorteilhafte Ausführungsformen ergeben sich aus den Unteransprüchen.

Hierfür sollen zunächst einmal einige Begriffe und Abkürzungen definiert werden, von denen eine oder mehrere, insbesondere alle, für die vorliegende Erfindung gelten sollen:

| | |
|---|---|
| - MR, MS: | Reihen und Spalten der Navigations-Markierungen, |
| - R, S: | Reihen und Spalten der vertikalen Tragsäulen des Lager-Regals, |
| - X, Y: | Richtungen der vorzugsweise lotrecht zueinander verlaufenden Reihen und Spalten der Tragsäulen, |

die Etagen-Fahrflächen auf den einzelnen Etagen sind automatisch virtuell unterteilt in
   - Abstell-Bereiche für Anhänger,
   - Verkehrsflächen zum Fahren von Traktoren, nämlich Fahrgassen zwischen Abstell-Bereichen und Verbindungsflächen zum Verbinden der Fahrgassen, unterbringen von Aufzügen etc.,
   - innerhalb der Abstell-Bereiche sind einzelne Lager-Flächen für jeweils einen Anhänger automatisch virtuell festgelegt,
   - Erstreckungsrichtung der Fahrgassen vorzugsweise in X-Richtung des Säulenrasters,
   - Erstreckungsrichtung der meist beidseits von den Fahrgassen, insbesondere im rechten Winkel, abstrebenden Lager-Halbreihen, in denen die Lager-Flächen fluchtend hintereinander liegen, vorzugsweise in Y-Richtung des Säulenrasters,
   - die beidseits von einer Fahrgasse abstrebenden Lager-Halbreihen fluchten zueinander,
   - innerhalb einer Lager-Halbreihe weisen die Anhänger mit dieser Frontseite alle in die gleiche Richtung, nämlich zu der zugeordneten Lagergasse, hin
   - innerhalb der Abstellbereiche sind die Lagerflächen zueinander sowie zu den Tragsäulen mit einem Rangierabstand angeordnet,
jeder der, in der Aufsicht betrachtet meist rechteckigen, Anhänger hat
   - nur an einer Seite, der Frontseite, wenigstens ein Kupplungselement zum Ankuppeln eines Traktors, vorzugsweise zwei entlang der Frontseite beabstandete Kupplungselemente,
   - die Längsrichtung des Anhängers verläuft lotrecht zu dieser Frontseite,
   - die Erstreckung des Anhängers lotrecht zu seiner Längsrichtung ist die Breite des Anhängers,
   - außer einer Zentralsteuerung, die das gesamte Lager-Regal, insbesondere das gesamte Lager, steuert, besitzt jeder Traktor eine Onbord-Steuerung, die mit der Zentralsteuerung drahtlos in Verbindung steht, wobei diese Verbindung z.B. aufgrund Funktechnik abreißen kann, wenn sich der Traktor im Inneren des Lagers befindet,
   - frei befahrbare Flächen sind von der Zentralsteuerung zum Befahren durch den Traktor zur Erfüllung seines Auftrages diesem freigegebene Flächen, dies können insbesondere Verkehrsflächen und/oder momentan nicht gefüllte Abstellbereiche sein,
   - als Länge (LG) bzw. Breite (BG) eines Gespanns (4 + 2) zur Festlegung der Abmessungen einer Fahrgasse wird die größte Länge (LG) bzw. Breite (BG) eines Gespanns (4 + 2) mit einem Anhänger der Art (2a, b) automatisch festgelegt, für die auf mindestens einer Seite dieser Fahrgasse (58) spezifische Lagerflächen (56 a, b) vorhanden sind.

Diese Aufgabe wird hinsichtlich des Verfahrens dadurch gelöst, dass ein Traktor einen Fahrtauftrag von der Zentralsteuerung in Form des Auftrages (z.B. Anhänger Einlagern oder Auslagern) und des Fahrt-Zieles erhält und ihre konkrete Fahrtroute zu dem vorgegebenen Ziel selbst mittels seiner Onbord-Steuerung festgelegt indem seine On-bord-Steuerung (6)
a) entweder von der Zentralsteuerung (1*) mehrere potentielle Soll-Fahrtrouten mitgeteilt erhält und eine davon auswählt,
b) oder von der Zentralsteuerung (1*) frei befahrbare Flächen, insbesondere alle frei befahrbare Flächen, sowie hilfreiche Hinweise zum Erstellen einer Soll-Fahrtroute mitgeteilt erhält und die Onbord-Steuerung (6) die Soll-Fahrtroute festlegt unter Berücksichtigung dieser Hinweise,
c) oder von der Zentralsteuerung (1*) **nur** frei befahrbare Flächen insbesondere alle frei befahrbare Flächen, mitgeteilt erhält und die Onbord-Steuerung (6) die Soll-Fahrtroute innerhalb der frei befahrbare Flächen festlegt
und das Ziel anfährt.

Frei befahrbare Flächen sind Flächen, innerhalb derer sich kein Hindernis für den Traktor oder ein Gespann aus Traktor und Anhänger befindet, und die insbesondere so groß, insbesondere so breit, sind, dass ein Traktor und/oder ein Gespann aus Traktor und Anhänger sie passieren kann.

Die hilfreichen Hinweise im Fall b) können ergänzende Angaben sein, die für das festlegen einer optimalen Soll-Fahrtroute hilfreich sind, beispielsweise die Information, aus welcher der beiden Richtungen in Erstreckungsrichtung einer Lagergasse die vorgesehene Lagerfläche am besten anzufahren ist wegen einer benachbarten Tragsäule in der Lagergasse.

Zum Einen reduziert dies die notwendige Menge an Datenaustausch zwischen ZentralSteuerung und Onbord-Steuerung, zum Anderen sind die Traktoren somit auch bei einem Abbruch dieser Daten-Verbindung während eines Fahrtauftrages weiterhin funktionsfähig, denn wenn während der Fahrt Probleme auftauchen, die eine neue Fahrtroute erfordern, kann die Onbord-Steuerung dies ohne Datenverbindung zur Zentralsteuerung lösen.

Die Fahrtroute kann ein Polygonzug sein oder auch eine Abfolge von geraden und gekrümmten Abschnitten.

Auf der Fahrt zum Ziel überprüft der Traktor mehrfach seine momentane Ist Position und vergleicht sie mit der momentanen Soll-Position seiner Soll-Fahrtroute, wobei es häufig Abweichungen geben wird wegen Schlupf der Räder und anderen Ungenauigkeiten. Werden solche Abweichungen festgestellt, gleicht der Traktor diese aus, vorzugsweise unmittelbar nach Feststellung, insbesondere indem er zur Soll-Fahrtroute und dadurch die Abweichungen ausgleicht.

Die durch teilweises Zurücklegen der Fahrtroute zum Ziel nicht mehr benötigten frei befahrbare Flächen kann der Traktor schon vor erreichen seines Zieles der Zentralsteuerung wieder freigegeben zum befahren durch andere Traktoren.

Die Vorgabe des Ziels an den Traktor sowie die Bestimmung seiner Position und/oder Fahrtrichtung durch den Traktor kann auf unterschiedliche Art und Weise erfolgen:
Eine erste, vorliegend favorisierte, Möglichkeit besteht darin, dem Lager-Regal, insbesondere dem gesamten Lager, ein absolutes, vorzugsweise dreidimensionales, Koordinatensystem zuzuordnen, dessen horizontale X*-und Y*-Richtung häufig den beiden Erstreckungsrichtungen des in der Aufsicht betrachtet rechteckigen Lager-Regals entsprechen. Dessen gegebenenfalls vorhandene Z*-Richtung kann die Vertikale sein, wobei diese allerdings nicht unbedingt die absolute Höhe über dem Untergrund angeben muss, sondern es ausreichend ist, wenn die Z*-Koordinate lediglich in der Nummer der Etage des mehretagigen Lager-Regals besteht, falls dieses aus in jeder Etage durchgehenden, also auf der gleichen Höhe befindlichen, Etagen-Fahrflächen besteht.

Dabei sind für jede Navigations-Markierung jedes Regal-Bodens, insbesondere einen definierten Markierungs-Bezugspunkt jeder Navigations-Markierung, die Koordinaten in diesem absoluten Koordinatensystem bekannt und hinterlegt, sowohl in der Zentralsteuerung als auch in der Onbord-Steuerung.

Die Navigation des Traktors erfolgt durch Identifizieren der von der Boden-Kamera des Traktors erfassten Navigations-Markierung und in Kenntnis der Lage dieser Markierung im absoluten Koordinatensystem des Lager Regals.

Die Onbord-Steuerung erhält dann von der Zielsteuerung das Ziel in Form der absolut-Koordinaten und/oder des Ziel-Regalbodens und der dortigen Ziel-Markierung mitgeteilt.

Die Bestimmung der tatsächlichen, millimetergenauen Lage jeder einzelnen Markierung des Lagers im absoluten Koordinatensystem ist jedoch aufwändig, denn die einzelnen Regal-Böden befinden sich nicht immer exakt in der Soll-Lage innerhalb des absoluten Koordinatensystems, sondern können demgegenüber einen z.B., durch Montage-Ungenauigkeiten bedingten Absolut-Versatz aufweisen, der dann auch einen relativ-Versatz zwischen zwei benachbarten Regalböden bewirken kann.

Eine Abweichung des Regalbodens von der vorgesehenen Drehlage, also Winkelstellung, zum absoluten Koordinatensystem wird dagegen in aller Regel weder überprüft noch ermittelt.

Eine zweite Möglichkeit besteht in der Positionsbestimmung seitens des Traktors durch das relative Koordinatensystem, welches dadurch vorliegt, dass die Onbord-Steuerung die Position und insbesondere auch die Lage jeder der Navigations-Markierungen relativ zu dem betreffenden Regalboden kennt. Dies wäre eine absolute Positionsbestimmung, wenn die Onbord-Steuerung die exakte Absolutposition jedes Regalbodens im Regal, also auch dessen Abweichung von seiner Soll-Position kennen würde. Für die Grobbestimmung der Position geht man jedoch davon aus, dass jeder Regalboden exakt an seiner Soll-Position liegt, weiß aber, dass dies nicht immer zutrifft.

Sobald die Bodenkamera des Traktors eine solche Markierung erfasst, ist die Position und Drehlage des Traktors zu dieser Markierung und damit gesamten Regalbodens, auf dem sich die Markierung befindet, bekannt, denn auf einem Regalboden sind keine zwei identischen Navigations-Markierungen vorhanden.

Vorzugsweise sind die Regalböden hinsichtlich eines Großteils ihrer Markierungen oder hinsichtlich aller Markierungen identisch mit Navigations-Markierungen ausgestattet, vorzugsweise bedruckt. Großteil bedeutet, dass mehr als 80 %, besser mehr als 90 %, besser mehr als 95 %, besser mehr als 98 %, besser mehr als 99 % der Markierungen auf den Regalböden zueinander identisch sind.

So können die in den einzelnen Regalböden eventuell unterschiedlich vorhandenen Eckaussparungen zur Aufnahme von vertikalen Tragsäulen vorhanden sein, sodass die dort sonst vorhandenen Markierungen fehlen.

Da in der Regel an jeder Tragsäule vier Regalböden aneinandergrenzen, muss meist in jeder eine rechteckige Eckaussparung der Größe etwa eines Viertels des Querschnittes der Tragsäule hergestellt werden, damit die Regalböden auch entlang der mittigen Verbindung-Linie zwischen zwei Tragsäulen mit einer möglichst geringen Fuge, vorzugsweise fugenlos, aneinanderstoßen.

Eine weitere Ausnahme können eine oder mehrere benachbart zueinander liegende Sondermarkierungen auf einem Regalboden sein, die nur auf diesem einen Regalboden vorkommen und insbesondere Abwandlungen gegenüber den sonst an diesen Stellen vorhandenen normalen Markierungen bei allen anderen Regalböden darstellen. Diese Sondermarkierungen enthalten beispielsweise Identität, beispielsweise Regalboden-Nummer, des Regalbodens auf dem sie sich befinden und/oder die Position dieses Regalbodens im Lager-Regal. Diese Sonder-Markierungen dienen primär zum neu Einsetzen eines Traktors in das Lager-Regal, der hierfür mit seiner Bodenkamera auf diese Sonder-Markierung gerichtet auf dem entsprechenden Regalboden abgesetzt wird, und damit weiß, auf welchem Regalboden und dort an welcher Position und in welcher Drehlage er sich befindet.

Dies ist notwendig, da diese zweite Methode darauf beruht, dass der Traktor ausgehend von seiner bekannten momentanen Position seine Fortbewegung in Richtung Ziel von seiner Ausgangsposition aus immer weiter rechnet, indem er sich in Richtung Fahrt-Ziel bewegt und alle ins Blickfeld der Bodenkamera gelangenden Markierungen analysiert und dadurch seine Ist-Position kennt und mit seiner momentanen Soll-Position entlang der Soll-Fahrtroute gut vergleichen kann, bis er das von der Zentralsteuerung insbesondere in Form des Ziel-Regalbodens und der dortigen Ziel-Markierung vorgegebene Fahrt-Ziel erreicht hat.

Wenn der Traktor dabei eine Fuge von einem zum nächsten Regalboden überläuft, stellt dies die Bodenkamera und die damit gekoppelte Onbord-Steuerung fest. Ausgehend vom bekannten bisherigen Regalboden, also dem alten Regalboden, und der letzten Position auf diesem Regalboden errechnet die Onbord-Steuerung unter Berücksichtigung der Fahrtrichtung - z.B. ermittelt aus den verschiedenen Rad-Drehungen der Antriebsräder - und nach Erkennen und Analysieren der ersten Markierung auf dem neuen Regalboden, wo auf dem neuen Regalboden sich der Traktor nun befindet und welches dieser neue Regalboden ist.

Dabei können als zusätzliche Plausibilität-Kontrolle von der Onbord-Steuerung die ebenfalls detektierten Rad-Drehungen hinsichtlich Anzahl und Richtung der Antriebsräder des Traktors und somit die daraus errechnete zurückgelegte Fahrtstrecke und Fahrtrichtung des Traktors zwischen der letzten ermittelten Position auf dem alten Regalboden und der ersten ermittelten Position auf dem neuen Regalboden berücksichtigt werden.

Ebenso kann die verstrichene Fahr-Zeit dazwischen berücksichtigt werden und anhand dessen kontrolliert werden, ob die errechnete neue Position auf dem neuen Regalboden richtig sein kann.

Vorzugsweise sind die Navigation-Markierungen in einer zweidimensionalen Matrix, also in Markierungs-Reihen und Markierungs-Spalten, in gleichmäßigen Abständen, vorzugsweise in beiden dieser Richtungen, angeordnet, wobei die Verlaufsrichtungen der Reihen und Spalten mit den Kanten des in der Regel rechteckigen Regalbodens parallel verlaufen.

### (Trennbalken:)

Zur leichteren Orientierung der Onbord-Steuerung ist dabei in einer Richtung, vorzugsweise in Richtung der Reihen, zwischen den Reihen jeweils ein Trennbalken im Abstand zu den Markierungen angeordnet, die vorzugsweise über die gesamte Erstreckung des Regalbodens durchgehen, zumindest über alle Markierungen in dieser Richtung durchgehen.

Die Längskanten der Trennbalken können von der Onbord-Steuerung und der damit verbundenen Bodenkamera vorzugsweise zur Bestimmung der Richtung der Reihen von Markierungen genutzt werden, und hiervon abgeleitet die richtige Bewegungsrichtung des Traktors besonders genau festgelegt werden.

Vorzugsweise werden dabei nicht die Längskanten der Trennbalken direkt verwendet sondern von der Onbord-Steuerung aus den beiden Längskanten des Trennbalkens eine einzige Trennlinie errechnet, die vorzugsweise die Mitte zwischen den beiden Längskanten darstellt und es wird diese Trennlinie rechnerisch verwendet.

Vorzugsweise wird für jede der meist rechteckigen Markierungen - die meist die Form eines Streifenmusters oder Pixelmusters haben - ein einziger Markierungs-Bezugspunkt festgelegt, der jedoch nicht unbedingt innerhalb der Fläche der Navigations-Markierung liegen muss, sondern vorzugsweise am Rand oder außerhalb der Navigationsmarkierung.

### (Versatz:)

Da die Regalböden beim Aufbau des Lagers hinsichtlich ihrer Reihen und Spalten ihrer Navigation-Markierungen nicht exakt fluchtend zueinander montiert werden können, tritt fast an jeder Fuge zwischen zwei Regalböden ein Versatz der Reihen und Spalten der benachbarten Regalböden zueinander auf:
Vorzugsweise sind die, insbesondere alle, Navigation-Markierungen gleich groß, und insbesondere rechteckig.

Befindet sich die Stelle, an der eine Fuge überfahren wird, dagegen nahe (definieren) dem Ziel der Fahrtroute, also in der Regel einer An-/Ab-Kopplungsstelle, insbesondere in einem Abstellbereich, so handelt es sich um einen Einpark- oder Ausparkvorgang, wobei das Einparken eines Gespanns immer im Schiebebetrieb des Gespanns vollzogen wird.

Um die Flächenausnutzung zu optimieren, also einen möglichst hohen Anteil an Abstellbereichen an der gesamten Etagenfläche und damit eine möglichst hohe Anzahl an Lagerflächen zu erzielen, werden erfindungsgemäß die Abstellbereiche und insbesondere die einzelnen Lagerflächen innerhalb der Abstellbereiche in Relation zu den Positionen und Abstände der Tragsäulen sowie der Verlaufsrichtung von deren Reihen oder Spalten optimiert festgelegt und umgekehrt:
Da in der Aufsicht betrachtet die Grundfläche des Lager-Regals und damit die übereinander angeordneten meist gleich großen Etagenflächen rechteckig sind mit einer Längsrichtung als der größeren Erstreckungsrichtung gegenüber der Querrichtung, werden in aller Regel streifenförmige Abstellbereiche festgelegt werden, deren größte Erstreckungsrichtung mit der Längsrichtung der Etagenfläche und damit der Grundfläche des Lager-Regals übereinstimmt, und die parallel zueinander verlaufen, getrennt durch die dazwischen dann ebenfalls in Längsrichtung verlaufenden Fahrgassen.

Für die Zwecke der vorliegenden Erfindung wird die Verlaufsrichtung der Fahrgassen meist als X-Richtung gewählt und damit in der Regel auch die größte Erstreckungsrichtung der Abstellbereiche.

Vorzugsweise wird die Erstreckungsrichtung der Fahrgassen und Abstellbereiche übereinstimmend mit einer der Verlaufsrichtungen, der Reihen und Spalten, in denen die Tragsäulen angeordnet sind, festgelegt. In X-Richtung hintereinander stehende Tragsäulen werden als eine Reihe von Tragsäulen bezeichnet wird, die vorzugsweise übereinstimmt mit der Erstreckungsrichtung der Fahrgassen, und in Y-Richtung hintereinander stehende Tragsäulen werden als Spalte von Tragsäulen bezeichnet.

Dabei besteht das bevorzugte Ziel darin, den Abstand der Tragsäulen in X-Richtung einerseits und Y-Richtung andererseits gleich zu halten, um die statische Berechnung des Lager-Regals einfach zu gestalten.

Um in der Tiefe der Abstellbereiche, der Y-Richtung, also lotrecht X-Richtung, eine große Tiefe zu erzielen bei nicht allzu hoher Anzahl von in dieser Richtung hintereinander, aneinander anschließend festgelegten, Lagerflächen - einer sogenannten Lager-Halbreihe - werden die Anhänger vorzugsweise mit ihrer in der Aufsicht betrachteten Längserstreckung, der größeren Erstreckung, quer zur Verlaufsrichtung der Fahrgassen abgestellt und die Lagerflächen in dieser Orientierung festgelegt. Dementsprechend befindet sich eine Kupplungsvorrichtung an den Anhängern in aller Regel an einer Schmalseite des Anhängers, und zwar auf der der zugeordneten Fahrgasse zugewandten Schmalseite, denn von dort aus soll der Traktor in abgestellten Anhänger anfahren und ankuppeln können.

Bevorzugt müssen zur Optimierung der Flächennutzung die Anordnung und Abmessungen der Grundflächen für die darauf abzustellenden Anhänger abgestimmt werden auf die Säulenabstände in X- oder Y-Richtung.

Bevorzugt wird dabei die Lagerfläche, insbesondere deren Breite, optimiert in Relation zu nur einem der Säulenabstände, vorzugsweise in X-Richtung, meist der Verlaufsrichtung der Fahr-Gassen.

### (Abstimmung in X-Richtung)

Sofern das Lager erst errichtet werden soll für bestimmte Produkte und damit für bestimmte Grundflächen von Anhängern, können beide, also die Größe der Anhänger als auch die Säulenabstände, noch variiert werden, was vorzugsweise mit einem Optimierungsprogramm geschieht.

Steht dagegen das Lager bereits und liegt der Säulenabstand somit fest, so kann nur die Größe der Grundflächen der Anhänger variiert werden.

Eine Abstimmung in X-Richtung erfolgt mit dem Ziel, dass zwischen zwei in X-Richtung beanstandeten Tragsäulen mehrere Lagerflächen bzw. Lager-Halbreihen in X-Richtung nebeneinander angeordnet werden können mit möglichst geringem nicht als Abstellbereichen nutzbarer Fläche.

Zu diesem Zweck wird der freie Abstand zwischen in X-Richtung benachbarten Tragsäulen so festgelegt, dass er das ganzzahlige Mehrfache der für eine Lagerfläche insgesamt benötigten Breite in diese Richtung nur um maximal 30 %, besser maximal 20 %, besser maximal 10 %, besser maximal 5 % besser maximal 3 % überschreitet.

Diese insgesamt benötigte Breite einer Lagerfläche setzt sich zusammen aus der Breite der Lagerfläche selbst sowie eines Rangierabstandes in X-Richtung, der einerseits zwischen 2 benachbarten Lagerflächen bzw. Lager-Halbreihen und andererseits zwischen einer Lagerfläche bzw. Lager-Halbreihe und einer benachbarten Tragsäule vorgesehen werden muss.

Die Lagerfläche ist bereits -in der Breite ebenso wie in der Länge - größer als die Breite der Grundfläche des Anhängers selbst, um Ungenauigkeiten beim Abstellen, Ungenauigkeiten bei der Produktion der Anhänger und Ähnliches abfedern zu können.

Der zusätzliche Rangierabstand dient dem einfacheren Rangieren beim Ein- und Ausparken.

Als Rangierabstand in X-Richtung zwischen zwei benachbarten Lagerflächen werden maximal 15 %, besser maximal 10 %, besser maximal 5 % der Breite einer Lagerfläche festgelegt.

Als Breite des Rangierabstandes in X-Richtung zwischen einer Lagerflächen und einer benachbarten Tragsäule werden maximal 10 %, besser maximal 5 % besser maximal 3 % der Breite einer Lagerfläche festgelegt.

Hinsichtlich der Lager-Halbreihe werden bevorzugt entlang einer Lager-Halbreihe nur Anhänger gleicher Breite fluchtend und hintereinander vorgesehen.

In Verlaufsrichtung der Lager-Halbreihe werden sich dabei meist nicht mehr als drei Lagerflächen hintereinander befinden, wobei jede nicht vorn an der Lagergasse liegende Lagerfläche schwerer zu erreichen ist mit zunehmender Tiefe in der Lager-Halbreihe, sodass in der 2. und 3. Position der Lager-Halbreihe von der Lagergasse aus gesehen nur Anhänger mit selten benötigten Produkten eingelagert werden sollten.

Insbesondere wird auch davon ausgegangen, dass bei zwei auf den beiden Seiten einer Fahrgasse voneinander abstrebenden Lager-Halbreihen die beiden Halbreihen zueinander fluchten.

Dennoch wird quer zur Verlaufsrichtung der Fahrgassen gemessen der Flächenanteil an Abstellbereichen größer sein als der Flächenanteil an Fahrgassen. Somit ist es nicht vermeidbar, dass Tragsäulen in den Abstellbereichen stehen.

Vorzugsweise werden die in Y-Richtung verlaufenden Spalten von ein Tragsäulen jeweils im Abstellbereich in einer Säulen-Furt positioniert, die ebenfalls in Y-Richtung verläuft und einen Streifen mit etwa etwas mehr als der Breite einer Tragsäule, verlaufend in Richtung der Halbreihen darstellt, in dem keine Lagerflächen vorgesehen werden.

Die Säulen-Furten stellen zwar einen Verlust an nutzbarer Fläche im Abstellbereich dar, erleichtern aber die Lagerverwaltung und das Ein- und Ausparken der Anhänger.

Da sich dies häufig nicht vermeiden lässt, werden diese bevorzugt in einer verlängerten Säulen-Furt, die sich in Y-Richtung erstreckt, positioniert, wodurch das Ein- und Ausparken von Anhängern im Abstellbereich am wenigsten behindert wird.

Ferner muss - quer zur Erstreckungsrichtung der Fahrgasse - die nutzbare freie Breite der Fahrgasse, also der lichte Abstand einer darin stehenden Säule zu einem der beiden benachbarten Rändern der Abstellbereiche, mindestens so groß sein wie die Breite eines Gespanns.

Alternativ - aber kaum mit der 1. Möglichkeit, der Abstimmung im X-Richtung kombinierbar - ist es möglich, eine Abstimmung der Größe der Lage und Anordnung der Lagerflächen zu den Säulenabständen in Y Richtung durchzuführen.

Dies ist jedoch nur sinnvoll, wenn sich in dieser Richtung die Abmessungen der Lagerflächen zu den Säulenabständen so verhalten, dass es möglich ist, die in X-Richtung verlaufenden Reihen von Tragsäulen überwiegend, insbesondere nur, in ebenfalls in X-Richtung verlaufenden Säulen-Furten anzuordnen, die sich zwischen den hinteren Enden von miteinander fluchtenden, aber unterschiedlichen Fahrgassen zugeordneten, Lager-Halbreihen befinden.

Auch hier sollten dann vorzugsweise in den Lagergasen keine Tragsäulen mehr vorhanden sein.

### (Breite Fahrgassen:)

Für die optimierte Flächenausnutzung können auch die Fahrgassen, insbesondere hinsichtlich ihrer Breite, optimiert werden.

Diese werden automatisch um maximal 20 cm, besser nur um maximal 10 cm, besser nur um maximal 5 cm größer festgelegt als die zum Wenden eines oder jedes oder des größtmöglichen im Lager vorkommenden Gespanns in der Fahrgasse benötigte Breite, also insbesondere größer als die in der Aufsicht betrachtet größte Diagonale eines Gespanns.

Falls das Wenden eines Gespanns in der Fahrgasse nicht unbedingt erforderlich ist, kann die Breite einer Fahrgasse auch geringer festgelegt werden als die zum Wenden benötigte Breite, und damit insbesondere auch geringer als die Länge eines Gespanns.

Die Breite der Fahrgasse muss dabei jedoch so gewählt werden, dass unter Berücksichtigung des Rangierabstandes zwischen den Lagerflächen ein Einfahren eines Gespanns in eine freie Lagerfläche von der Fahrgasse aus möglich ist.

### (Verschieden große Anhänger:)

Falls in einem Lager-Regal und insbesondere auf einer Etage unterschiedlich große Anhänger benutzt werden, so unterscheiden sich diese vorzugsweise in der Länge, aber besitzen im Wesentlichen oder auch exakt die gleiche Breite, innerhalb derer auch an einer Seite die Koppelelemente zum An- und Abkoppeln des Traktors vorhanden sind. Diese Seite wird als so genannte Frontseite definiert und die dazu lotrechte Richtung als Längsrichtung des Anhängers.

Zumindest sollten aber bei verschieden großen, insbesondere verschieden breiten, Anhängern die entsprechend unterschiedlich großen, insbesondere unterschiedlich breiten, Arten von Lagerflächen so angeordnet werden, dass entlang einer Lagergasse, insbesondere beidseits entlang einer Lagergasse, automatisch nur eine Art, also Größe, von Lagerflächen vorgesehen wird, was Platz beim Festlegen der Breite der Lagergassen spart.

Die Anordnung der Lagerflächen wird von der Zentralsteuerung vorzugsweise automatisch durchgeführt, insbesondere für das gesamte Lager, mithilfe eines Optimierungsprogramms, dem man vorgeben muss, in welchem Verhältnis zueinander die hinsichtlich ihrer in der Aufsicht betrachteten Größe verschiedenen Arten von Anhängern im Lager benötigt werden, und wie groß die Grundflächen dieser verschiedenen Arten von Anhänger sind.

Vorzugsweise besteht jede Lager-Halbreihe, vorzugsweise beide bezüglich der Fahrgasse fluchtend einander gegenüberliegende Halbreihen dieser Fahrgasse, nur aus gleich breiten Lagerflächen, wobei innerhalb einer Lager-Halbreihe die Länge der Lagerflächen durchaus variieren kann.

Vorzugsweise werden in X Richtung - sofern im Lager oder zumindest auf dieser Etage nur gleich breite Lagerflächen benötigt werden - jeweils gleich gestaltete Lager-Halbreihen nebeneinander angeordnet.

Wenn dagegen unterschiedlich breite Lagerflächen vorhanden sind, kann zwischen zwei in X-Richtung benachbarten Tragsäulen vorzugsweise jeweils die gleiche Abfolge von Lager-Halbreihen, also beispielsweise jeweils eine schmale und eine breite Lager-Halbreihe, angeordnet werden.

Prinzipiell sollte bei unterschiedlich breiten Lagerflächen
- **entweder** zwischen zwei in X-Richtung beabstandeten Säulen meist die in X-richtung gleiche Abfolge von Lager-Halbreihen mit jeweils unterschiedlicher Breite ihrer Lagerflächen vorhanden sein,
- **oder** der Säulen Abstand (SAX) in X-Richtung in Relation zu den unterschiedlichen Breiten der Lagerflächen so festgelegt werden, dass ein ganzzahliges x-faches der größeren Breite von einem höheren ganzzahligen y-fachen der geringeren Breite um nicht mehr als 20 %, besser um nicht mehr als 10 %, von dem ganzzahligen y-fachen abweicht.
- insbesondere x +1 =y gilt.

### (Flächendefinitionen:)

Für jede Form und Größe an Anhängern - wobei vorliegend immer von einer in der Aufsicht rechteckigen Form ausgegangen wird - wird in Abhängigkeit von der Größe des Anhängers eine entsprechende Größe einer dafür benötigten Lagerfläche festgelegt,, die etwas größer ist als die Fläche des Anhängers selbst, da
- abhängig von vielen Faktoren ein Anhänger nie exakt an einer vorgegebenen Position abgestellt werden kann und
- um Fertigungs-Ungenauigkeiten des Anhängers einschließlich seiner Koppelelemente zu kompensieren.

Diese virtuellen Lagerflächen werden innerhalb der Abstellbereiche vorzugsweise nicht lückenlos aneinander angeordnet, sondern
- mit einem Rangierabstand in X-Richtung, um Toleranzen der Fahrtroute beim Einfahren und Ausfahren zu kompensieren
   und/oder
- mit einem Rangierabstand in Y-Richtung, um ein gegenseitiges berühren oder gar verhaken von abgestellten Anhängern zuverlässig zu vermeiden.

### (Flächendefinitionen:)

Für jede Form und Größe an Anhängern - wobei vorliegend immer von einer in der Aufsicht rechteckigen Form ausgegangen wird - wird in Abhängigkeit von der Größe des Anhängers eine entsprechende Größe einer dafür benötigten Lagerfläche festgelegt, die etwas größer ist als die Fläche des Anhängers selbst, da
- abhängig von vielen Faktoren ein Anhänger nie exakt an einer vorgegebenen Position abgestellt werden kann und
- um Fertigungs-Ungenauigkeiten des Anhängers einschließlich seiner Koppelelemente zu kompensieren.

Diese virtuellen Lagerflächen werden innerhalb der Abstellbereiche vorzugsweise nicht lückenlos aneinander angeordnet, sondern
- mit einem Rangierabstand in X-Richtung, um Toleranzen der Fahrtroute beim Einfahren und Ausfahren zu kompensieren
   und/oder
- mit einem Rangierabstand in Y-Richtung, um ein gegenseitiges berühren oder gar verhaken von abgestellten Anhängern zuverlässig zu vermeiden.

### (Zusammensetzung Lager-Halbreihe:)

Sofern es unterschiedlich große Lagerflächen gibt, wird in Verlaufsrichtung der einzelnen Lagerreihen vorzugsweise immer die gleich Abfolge von Größen von Lagerflächen gewählt und in Verlaufsrichtung der Fahrgasse die, vorzugsweise identisch aufgebauten, Lagerreihen parallel nebeneinander und zueinander fluchtend vorgesehen.

Diese Festlegung muss nicht über sehr lange Zeiträume konstant bleiben, sondern kann sich während des Betriebes des Lagers ändern durch neue Festlegung seitens der Zentralsteuerung, wenn sich beispielsweise das Verhältnis der unterschiedlichen großen Anhänger zueinander ändert aufgrund sich ändernden Bedarfes.

Dabei müssen vor großflächigen Änderungen gegebenenfalls die einer oder mehreren Fahrgassen zugeordneten Abstellbereiche von Anhängern gelehrt werden.

Ebenfalls für einen geringen Anteil an Fahrgassen an der gesamten Etagenfläche wird in der ersten Zeile von Lagerflächen auf den beiden Seiten parallel zu einer Fahrgasse vorzugsweise die gleiche Größe von Lagerflächen vorgesehen, um die Breite der Fahrgasse minimieren zu können:
Falls auf der einen Seite längere und auf der anderen Seite kürzere Lagerflächen vorgesehen werden, müsste die Breite der Fahrgasse nach dem Raumbedarf für das Einparken in Abhängigkeit der Abmessungen der längeren Anhänger festgelegt werden.

Vorzugsweise werden nicht nur in der ersten Zeile neben den beiden Rändern einer Fahrgasse, sondern auch noch in der weiter von der Fahrgasse entfernten zweiten Zeile beidseits die gleichen Lagerflächen vorgesehen.

### (Platten-Versatz:)

Wenn die Soll-Fahrtroute einen längeren geraden Abschnitt bis z. B. zur nächsten Ecke des Polygonzuges enthält, verläuft dieser gerade Abschnitt in aller Regel nicht parallel zu der Verlaufsrichtung der - meist in Reihen und Spalten angeordneten - Navigations-Markierungen, da dies in aller Regel nicht der kürzeste Weg wäre.

Gerade wenn relativ kleine und leichte Produkte eingelagert werden sollen, bestehen die Etagenflächen aus Regalböden, die auf Längs- und Quertraversen des Tragwerks aufgelegt sind und auf deren Oberseite, der Fahrfläche, die Navigations-Markierungen aufgebracht sind, alternativ auf deren Unterseite.

Da bei dem Aufbau des Lagerregals diese Regalböden einerseits oft nicht vollständig fugenlos aneinander grenzen und anderseits die Navigations-Markierungen auf den aneinander angrenzenden Regalböden hinsichtlich der Verlaufsrichtung ihrer Reihen und/oder Spalten, also der Verlaufsrichtung quer zur Erstreckungsrichtung der Fuge, einen Versatz aufweisen können, muss die Onbord-Steuerung damit umgehen können, ohne den Fahrtauftrag abzubrechen.

Hierfür darf die Breite der Fuge nicht größer sein, als eine mit dem Traktor und den Anhängern, insbesondere deren Rädern bzw. Rollen, überwindbare Breite.

Idealerweise sollte vor der Inbetriebnahme des Lagers gerade nicht eine Ermittlung des Quer-Versatzes der beidseitig vorhandenen Markierungen entlang aller Fugen notwendig sein, gegebenenfalls auch die Breite aller Fugen, da dies einen ganz erheblichen Arbeitsaufwand darstellt, jedoch ist dies meist nicht zu vermeiden. Der Winkelversatz zwischen den beidseitig vorhandenen Markierungen wird ohnehin in aller Regel nicht ermittelt und außer Acht gelassen.

Nachdem alle Versatze aufgenommen wurden, ist sowohl der Zentralsteuerung als auch der Onbord-Steuerung die tatsächliche Position, also die exakte Ist-Position, jedes Regalbodens innerhalb des Lager-Regals bekannt und damit auch die Größe des absoluten Versatzes, insbesondere in Richtung der Fuge, eines Regalbodens zu seiner Soll-Position. Damit ist auch die Größe des relativen Versatzes jedes Regalbodens zu jedem seiner benachbarten Regalböden bekannt.

Die Steuerung kann nach Überfahren der Fuge durch die Kamera, insbesondere die Bodenkamera, bei Bedarf erkennen, welche auf dem neuen Regalboden vorhandene Reihe oder Spalte von Markierungen die Fortsetzung der vorherigen abgetasteten Reihe oder Spalte ist, was jedoch nur in bestimmten Situationen von Interesse ist.

Dabei sollte klargestellt werden, dass die Kamera die Fuge selbst nicht detektieren können muss, sondern lediglich durch Abtasten der ersten Navigations-Markierung nach Überfahren der Fuge den Versatz von deren Reihe oder Spalte gegenüber der Reihe oder Spalte der letzten Markierung, die sich noch auf dem vorherigen Regalboden befand, feststellt.

Je nach Fahrsituation geht die Onbord-Steuerung mit einem solchen Versatz jedoch unterschiedlich um:
Zunächst einmal sollte klargestellt werden, dass die Onbord-Steuerung davon ausgeht, dass jeder Regal Boden sich innerhalb des Lager-Regals exakt an seiner vorgesehenen Soll-Position befindet.

Ferner umfasst die Onbord-Steuerung vorzugsweise mehrere Steuerungs-Ebenen, die hierarchisch zusammenarbeiten
- Die oberste ist die sogenannte Planungs-Ebene, die die Soll-Fahrtrouten festlegt und insbesondere mehrfach während der Fahrt zum Ziel, vorzugsweise ständig, aktualisiert und/oder optimiert.
- Die nächste Ebene darunter ist die Fahr-Ebene, die das Fahren des Traktors möglichst entlang der Soll-Fahrtroute steuert, dabei die aktuelle Ist-Position des Traktors mit seiner aktuellen Soll-Position vergleicht und gegebenenfalls die Differenz ausgleicht, vor allem aber die aktuelle Position auch an die Planungsebene meldet.
- Die unterste Ebene ist die sogenannte Orientierungs-Ebene, die mittels insbesondere der Bodenkamera die Markierungen liest und analysiert und daraus die Ist-Lage des Traktors ermittelt und an die Fahr-Ebene meldet, damit diese den Vergleich mit der aktuellen Soll-Position durchführen kann.

Befindet sich die Stelle, an der die Fuge überfahren wird, nicht in der Nähe eines Zieles der Soll-Fahrtroute, insbesondere einer An-/Ab-Kuppelungsstelle, so interessiert der relative als auch der absolute Versatz die Onbord-Steuerung nicht, weil dann der Traktor nach Überfahren der Fuge sich an den nächsten im Sichtbereich seiner Bodenkamera auftauchenden Markierungen orientiert und weiterhin seinem in Absolut-Koordinaten definierten Ziel entgegenstrebt.

Hat sich der Traktor jedoch bis auf eine vorgegebene Peil-Entfernung einem abgestellten Anhänger als vorgegebenem Ziel genährt, so identifiziert der Traktor mittels eines berührungslos, auf Entfernung wirkenden, vorzugsweise optischen Sensors beispielsweise mittels Zirkulation den Anhänger anhand einer für diesen Sensor analysierbaren Identifikations-Markierung und ermittelt dabei - beispielsweise weil sich die Identifikations-Markierung an einer definierten Stelle der Frontseite des Anhängers befindet - auch die exakte Lage und Entfernung der Frontseite des Anhängers zum Traktor.

Ausgehend von seiner eigenen Ist-Position korrigiert er damit auch die im von der Zentralsteuerung vorgegebene Soll-Position seines Zieles, des Anhängers, nähert sich dem Anhänger immer mehr und kann diesen so exakt kontaktieren, dass seine Koppel-Elemente in Eingriff mit den Gegen-Elementen des Anhängers kommen können.

Liegt dabei die Fuge so, dass der Traktor zunächst von dem alten Regalboden aus den Anhänger auf dem neuen Regalboden anpeilen muss, aber bei der nachfolgenden weiteren Annäherung der Traktor, insbesondere dessen Bodenkamera, die Fuge überläuft, so orientiert sich die Onbord-Steuerung des Traktors ab der Fuge zwar an den sich aus den Markierungen auf dem neuen Regal Boden ergebenden Position, addiert bzw. subtrahiert hiervon jedoch den relativen Versatz zwischen altem und neuem Regalboden, die Onbord-Steuerung kennt oder für diese Zwecke von der Zentralsteuerung mitgeteilt bekommt. Somit orientiert sich die Onbord-Steuerung an den Markierungen des neuen Regalbodens so, als ob dessen Markierungen mit dem Markierung-Reihen oder Markierung-Spalten des alten Regalbodens ohne Versatzfluchten würden.

Ist das Ziel kein abgestellter Anhänger sondern eine leere Lagerfläche, die mit einem bereits angekuppelten Anhänger angefahren werden soll, so hilft diese Methode, den Anhänger tatsächlich innerhalb der vorgesehenen Lagerfläche, die sich dann ebenfalls knapp hinter der Fuge befindet, abzustellen.

In beiden Situationen ist diese Vorgehensweise insbesondere dann hilfreich, wenn sich beim Ankuppeln oder Abkuppeln Anhänger einerseits und der kuppelnde Traktor, insbesondere das Sichtfeld seiner Bodenkamera, andererseits auf verschiedenen Seiten der Fuge befinden.

Hinsichtlich des Flächenlagers und insbesondere dessen Lagerregals handelt es sich somit um eine Bauform, bei dem ohne körperlich vorgegebene Fahrspuren frei auf den Fahrflächen fahrende Traktoren auf allen Etagen des Lagerregals mit und ohne angekuppelte Anhänger fahren können und insbesondere selbsttätig die vorhandenen Höhen-Transfervorrichtungen benutzen können und hierfür sowohl die Höhen-Transfervorrichtungen als auch die Zentralsteuerung und die Onbord-Steuerung entsprechend ausgestattet sind.

Bei einem solchen Lager wird die genannte Aufgabe dadurch gelöst, dass die Etagen-Fahrflächen virtuell, also ohne körperliche Abgrenzung, vorzugsweise von der Zentralsteuerung, unterteilt sind in
- einerseits Abstellbereiche mit Lagerflächen für Anhänger, auf denen zum Zwecke der Einlagerung Anhänger von den Traktoren abgestellt werden können,
- andererseits Verkehrsflächen zum Verfahren von Traktoren oder Gespannen darauf, insbesondere Fahrgassen, die vorzugsweise gerade, insbesondere parallel zueinander, verlaufen und sich zwischen den Abstellbereichen erstrecken und dem direkten Anfahren von einzelnen Lagerflächen innerhalb der Abstellbereiche durch Traktoren und Gespanne dienen.

Damit die Abstellbereiche zwischen den Fahrgassen in der Tiefe möglichst groß sind, was ein möglichst großes Verhältnis von Abstellfläche im Vergleich zu Fläche der Fahrgassen begünstigt, sind in Y-Richtung lotrecht zur Verlaufsrichtung der Fahrgassen, meist der X-Richtung, im Abstellbereich mehrere Lagerflächen hintereinander in der Tiefe des Abstellbereiches angeordnet, vorzugsweise zwei oder gar drei Lagerflächen.

Eine Lagerfläche ist ein virtuell, aber nicht körperlich, auf der Etagen-Fahrfläche festgelegter Bereich zum Abstellen eines Anhängers, bei mehreren Sorten von in der Aufsicht betrachteten Größen von Anhängern innerhalb eines Lagerregals vorzugsweise zum Abstellen einer bestimmten Sorte eines Anhängers.

Dabei ist die Lagerfläche zumindest in der Breite, vorzugsweise auch in der Länge, größer als die Grundfläche des darauf abzustellenden Anhängers, insbesondere um maximal 30 mm, besser um maximal 20 mm, besser um maximal 15 mm, um einerseits im abgestellten Zustand Sicherheitsabstände gegen Kollision zu bieten und ein nicht exakt positionsgenaues Abstellen des Anhängers zu kompensieren.

Dabei werden mit seltener benötigten Produkten beladene Anhänger meist nicht in der vordersten, der Fahrgasse zugewandten, Zeile von Lagerflächen angeordnet, sondern eher weiter hinten.

In der Regel befindet sich die Kupplung zum Ankuppeln des Traktors an einer Schmalseite des in der Aufsicht etwa rechteckigen Anhängers, die im Einlagerungszustand zur Fahrgasse hin weisen sollte, weshalb die Lagerflächen in ihrer Längsrichtung hintereinander in Lagerreihen in die Tiefe des Abstellbereiches hinein, also quer zur Verlaufsrichtung der Fahrgasse, angeordnet werden.

Zusätzlich sind die - vorzugsweise beide - Mündungen von Fahrgassen miteinander verbunden über weitere Verbindungsflächen, die dem Anfahren der einzelnen Fahrgassen durch die Traktoren und Gespanne dienen.

Weiterhin gelten für das fertig gestellte Flächenlager natürlich die weiter vorne, zur Vorgehensweise bei der Festlegung von bestimmten Anordnungen und Größen getroffenen Aussagen weiterhin, insbesondere betreffend
- die Positionierung der Lagerflächen relativ zu den Tragsäulen
- die Periodizität des Lagerregals in X-Richtung
- die Anordnung der Tragsäulen in abstellen Bereichen und/oder Fahrgassen
- die Breite der Fahrgasse
- die mehreren Größen hinsichtlich Länge und/oder breite von Anhängern und damit auch Lagerflächen.

Um Etagen wechseln zu können, kann als Höhen-Transfervorrichtung im einfachsten Fall, der keine beweglichen Teile benötigt, eine Rampe, insbesondere anstelle eines Teils einer Etagen-Fahrfläche, vorhanden sein, die die Etagen-Fahrflächen zweier übereinander benachbarter Etagenflächen miteinander verbindet. Die Höhen-Transfervorrichtung kann aber auch ein Aufzug sein.

### (Karee:)

Vorzugsweise ist ein in der Aufsicht gebildetes Karee aus im Viereck angeordneten, zueinander benachbarten Tragsäulen nicht nur von einem solchen Regalboden belegt, sondern von mehreren, zwei aneinandergrenzenden, Regalböden.

Um diese sicher und belastbar auflegen zu können, erfordert dies zwar außer den diese vier Tragsäulen in Längs- und Querrichtung verbindenden Längs- und Quertraversen auch eine Zwischentraverse im mittleren Bereich des Karrees, jedoch ist es durch diese Ausbildung möglich, einen der Regalböden von unten her, insbesondere einseitig, hochzudrücken und
- entweder auf einem benachbarten anderen Regalbogen, insbesondere dem anderen Regalboden des gleichen Karrees, abzulegen
- oder ihn im schräg angehobenen Zustand aus dem Lagerregal zu entfernen, beispielsweise wenn er defekt ist, insbesondere seine Navigationsmarkierungen unleserlich geworden sind.

Bei nur einem einzigen Regalboden pro Karee und geringer Etagenhöhe ist selbst ein maximal innerhalb einer Etage schräggestellter Regalboden meist noch nicht aus dem Lagerregal herausziehbar, da ja die Regalböden in der Horizontalen betrachtet aufgrund ihrer Eckaussparungen die Tragsäulen hintergreifen.

Vor allem kann auf diese Art und Weise durch Hochheben und im Regal zur Seite legen von solchen Regalböden von unten nach oben fortgesetzt ein sich über mehrere Etagen erstreckender Schacht innerhalb des Lagerregals geöffnet werden, durch den eine Bedienperson von unten oder oben aus an jede beliebige Stelle im Lagerregal gelangen kann.

### c) Ausführungsbeispiele

Ausführungsformen gemäß der Erfindung sind im Folgenden beispielhaft näher beschrieben. Es zeigen:
- **Figur 1:**: den Zentralbereich eines leeren Lagerregals in perspektivischer Ansicht,
- **Figur 2a:**: eine Aufsicht auf eine Etagen-Fahrfläche einer 1. Bauform eines Lagerregals mit darauf befindlichen Traktoren und Anhängern,
- **Figur 2b:**: eine Seitenansicht des Lagerregals aus Figur 2a,
- **Figur 2c:**: ein Gespann aus Traktor und Anhänger in der Aufsicht,
- **Figur 3a:**: eine Seite eines Regalbodens mit darauf angedeutete Navigation-Markierungen,
- **Figur 3b:**: eine Ausschnitt-Vergrößerung aus Figur 3a mit realen Markierungen,
- **Figur 3c:**: zwei an einer Tragsäule aneinander angrenzende Regalböden mit zueinander fluchtenden Navigations-Markierungen,
- **Figur 4a:**: zwei mit Versatz der Navigation-Markierungen aneinandergrenzende Regalböden,
- **Figur 4b:**: eine Darstellung gemäß Figur 4a mit zusätzlich eingezeichneter Kontur eines darüber fahrenden Gespanns.

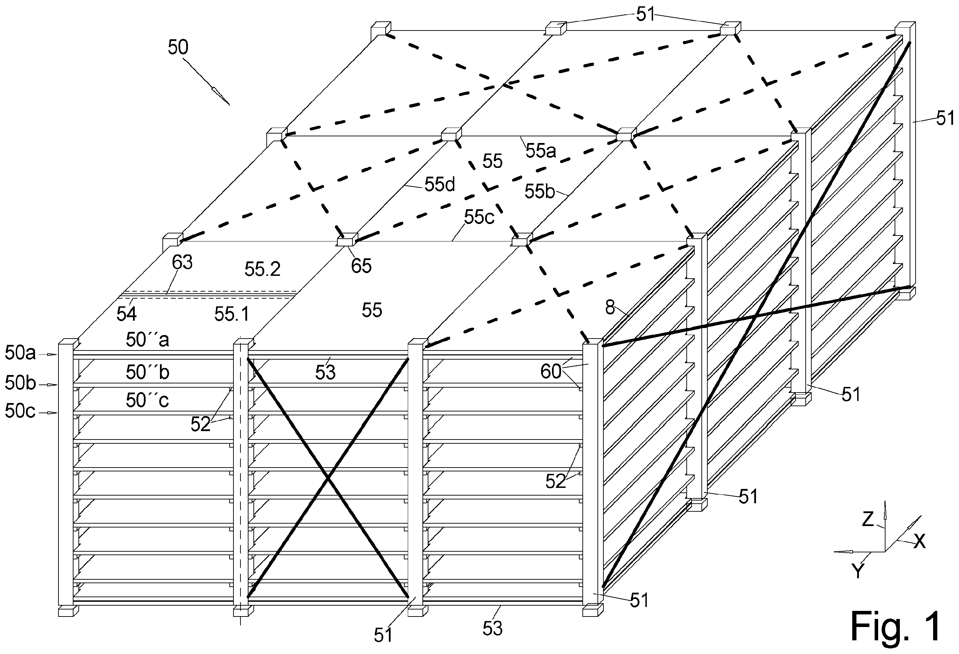

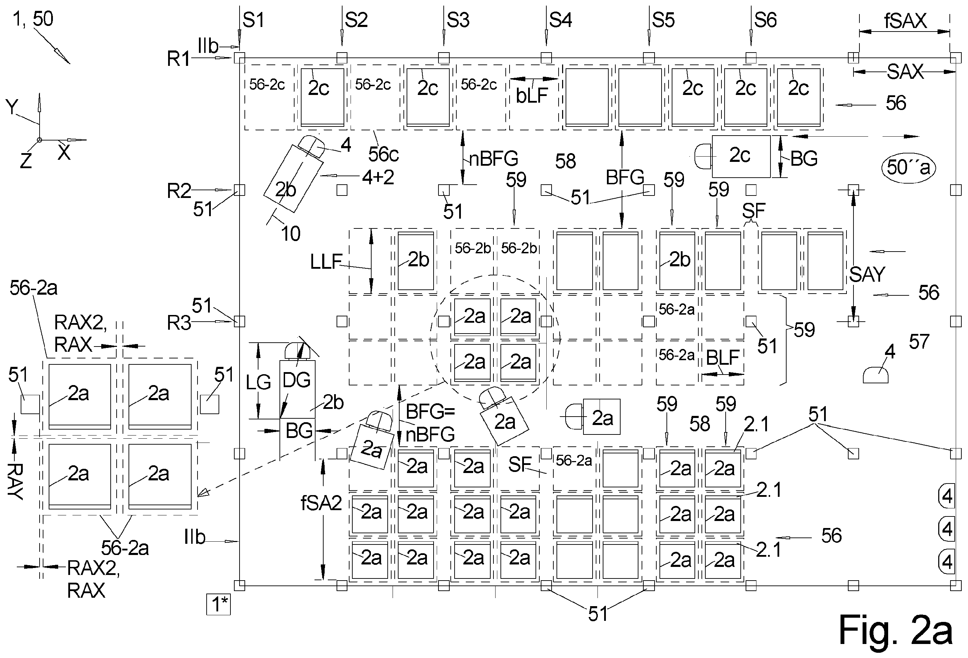

**Figur 1** zeigt in perspektivischer Ansicht ein leeres Lagerregal 50 mit Etagen-Fahrflächen 50"a, 50"b usw. in einer Vielzahl von Etagen 50a, b übereinander. Die einzelnen Etagen-Fahrflächen 50"a, 50"b werden gebildet durch die aneinandergrenzenden Regalböden 55, genauer deren Oberseiten, die möglichst lückenlos aneinander stoßen und von einem Tragwerk 60 getragen werden:
Das Tragwerk 60 besteht aus horizontal in Längsrichtung 101 des Lager-Regals 50 verlaufenden Längstraversen 52 und horizontal in Querrichtung 102 des Lager-Regals 50 verlaufenden Quertraversen 53, auf denen die einzelnen Regalböden 55 mit ihren in der Aufsicht betrachtet äußeren Kanten 55a bis d - da die Regalböden 55 in aller Regel rechteckig sind - jeweils aufliegen. Die horizontal verlaufenden Längstraversen 52 und Quertraversen 53 ihrerseits sind mit ihren Enden an sich in der Vertikalen Z erstreckenden, auf dem Untergrund stehenden, Tragsäulen 51 befestigt, beispielsweise nur eingehängt, die in der Aufsicht betrachtet in einem regelmäßigen Raster in Säulenreihen, die in Längsrichtung X und Querrichtung Y verlaufen, angeordnet sind, vorzugsweise - wie in **Figur 2a** dargestellt - in Längsrichtung X in einem Säulenabstand SAX und in Querrichtung Y in einem Säulenabstand SAY, wie in ersichtlich.

Als Längsrichtung X wird vorzugsweise die größte horizontale Erstreckung des in der Aufsicht insbesondere rechteckigen Lager-Regals 50 verstanden, als Querrichtung insbesondere die dazu im rechten Winkel verlaufende andere horizontale Richtung Y.

Vier in der Aufsicht betrachtet benachbarte Tragsäulen 51 bilden ein Karree, welches nicht unbedingt ein Quadrat, aber meist ein Rechteck ist.

Ein solches Karree kann, jeweils in der Aufsicht betrachtet, von einem einzigen Regalboden 55 ausgefüllt werden oder auch von mehreren aneinandergrenzenden Regalböden, beispielsweise von zwei Regalböden 55.1 und 55.2, wie im linken vorderen Karree in **Figur 1** dargestellt. Dann ist in aller Regel jeweils zusätzlich eine Zwischentraverse 54 im Traggestell 60 vorhanden, die unter der Fuge 63 zwischen den beiden ein Karree ausfüllen Regalböden 55.1, 55.2 verläuft und mit ihren Enden an jeweils einer Längstraverse 52 oder Quertraverse 53, hier jeweils einer Längstraverse 52, befestigt ist.

Vorzugsweise sind die beiden innerhalb eines Karrees aneinander angrenzenden, jeweils rechteckigen, Regalböden 55.1, 55.2,- bis auf die darin angebrachten Eck-Aussparungen 65 - vorzugsweise identisch ausgebildet.

Im Bereich der Tragsäulen 51 weisen die Regalböden 55 jedenfalls Eck-Aussparungen 65 auf, damit in dem dadurch bei vier aneinandergrenzenden Regalböden 55 entstehenden Freiraum die vertikale Tragsäule 51 aufgenommen werden kann und somit im Bereich zwischen den Tragsäulen 51 die Regalböden 55 mit ihren Kanten 55a bis c möglichst fugenfrei aneinander stoßen.

Wie bekannt, wird ein solches insgesamt kubisches Tragwerk 60 versteift, indem beispielsweise zwischen den benachbarten Tragsäulen 51, sei es den beiden äußersten Tragsäulen 51 des Lager-Regals 50 oder nur zwei benachbarten Tragsäulen 51, eine Diagonalverspannung durchgeführt wird, und zwar sowohl in Längsrichtung als auch in Querrichtung des-Regals 50. Zusätzlich und/oder stattdessen können in einer horizontalen Ebene Querverspannungen zwischen in der Aufsicht betrachtet voneinander beabstandeten Tragsäulen 51 vorhanden sein.

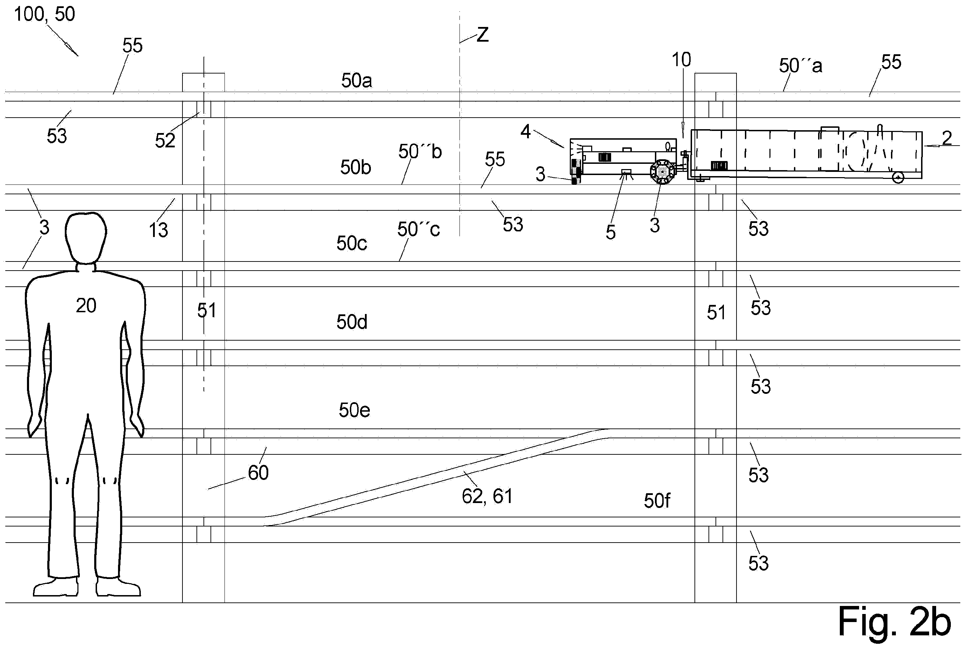

Die **Figuren 2a** und **2b** zeigen in Aufsicht sowie in Seitenansicht ein Lager 1, welches außer dem Lagerregal 50, wie in **Figur 1** perspektivisch dargestellt, eine Reihe von Lagerfahrzeugen in Form von autonom und unbemannt fahrenden Traktoren 4 und nicht selbstfahrenden Anhängern 2 umfasst, die jedoch von den Traktoren 4 automatisch angekuppelt, verfahren und wieder abgekuppelt und abgestellt werden können.

Die einzelnen Etagen-Fahrflächen 50"a, 50"b sind - meist übereinstimmend über alle Etagen 50a, b... - unterteilt in einerseits Verkehrsflächen 57, auf denen Traktoren 4 oder Gespanne 4+2 verfahren und andererseits Abstellbereiche 56, in denen Anhänger 2, teilweise auch Traktoren 4, abgestellt werden können.

Im Beispiel der **Figur 2a** erstreckt sich entlang der beiden Seiten in Längsrichtung sowie im mittleren Bereich in Längsrichtung der Etagen-Fläche 50"a jeweils ein Abstellbereich 56, zwischen denen ebenfalls in Längsrichtung X verlaufende Fahrgassen 58 als Teil der Verkehrsfläche 57 freibleiben, auf denen die Traktoren 4 oder Gespanne 4+2 verfahren.

An den stirnseitigen, hier linken und rechten, Enden der Fahrgassen 58 werden diese durch in Querrichtung Y verlaufende restliche Verkehrsflächen 57 miteinander verbunden.

In diesem Beispiel
- stimmt die größte Erstreckungsrichtung 58' der Fahrgassen 58 mit der in der Aufsicht betrachtet größten Erstreckung des rechteckigen Lager-Regals 50 sowie mit der Richtung der Reihen R1, R2 an Tragsäulen 51 überein und wird als X-Richtung bezeichnet,
- stimmt die lotrechte Querrichtung zur größten Erstreckungsrichtung 58' der Fahrgassen 58 mit der in der Aufsicht betrachtet kleineren Erstreckung des rechteckigen Lager-Regals 50 sowie mit der Richtung der Spalten S1, S2 an Tragsäulen 51 überein und wird als Y-Richtung bezeichnet.

In den Abstellbereichen 56 sind eine Vielzahl von Lagerflächen 56a, b, c von der Zentralsteuerung 1* des Lagerregals 50, insbesondere des gesamten Lagers 1, virtuell vordefiniert, auf denen jeweils ein Anhänger 2a, b, c abgestellt werden kann.

Wie ersichtlich, gibt es in diesem Beispiel drei in der Aufsicht betrachtet unterschiedlich große Arten 2a, b, c von Anhängern 2 und dementsprechend auch drei daran angepasste, unterschiedliche große Arten 56-2a, 56-2b, 56-2c von Lagerflächen, die zur Aufnahme der entsprechenden Größe des jeweils etwas kleineren Anhängers 2 ausgebildet sind, um Ungenauigkeiten beim Einhalten der Soll-Fahrtroute des Traktors 4 und Ähnliches zu tolerieren.

Im vorliegenden Beispiel sind die Anhänger 2a und 2b gleich breit, aber unterschiedlich lang, und lediglich die Anhänger 2c besitzen eine demgegenüber andere Breite. Das gleiche gilt für die entsprechenden Lagerflächen56-2a, 56-2b, 56-2c.

Wie **Figur 2a** zeigt, sind diese Lagerflächen 56-2a, 56-2b, 56-2c in Längsrichtung X nebeneinander angeordnet, wobei die Lagerflächen 56-2a, 56-2b, 56-2c und damit im darauf abgestellten Zustand auch die Anhänger 2a, b, c mit ihrer größten in der Aufsicht betrachteten Erstreckung sich in Querrichtung Y erstrecken.

Wie im in **Figur 2a** mittleren Abstellbereich 56 und unteren Abstellbereich 56 zu erkennen, umfassen diese Abstellbereiche 56 in Querrichtung Y mehrere Lagerflächen 56-2a, 56-2b, 56-2c hintereinander, die Lager-Halbreihen 59 bilden, von denen meist von jeder Fahrgasse 58 aus jeweils eine in die beiden einander entgegengesetzten Y-Richtungen und fluchtend zueinander abstreben.

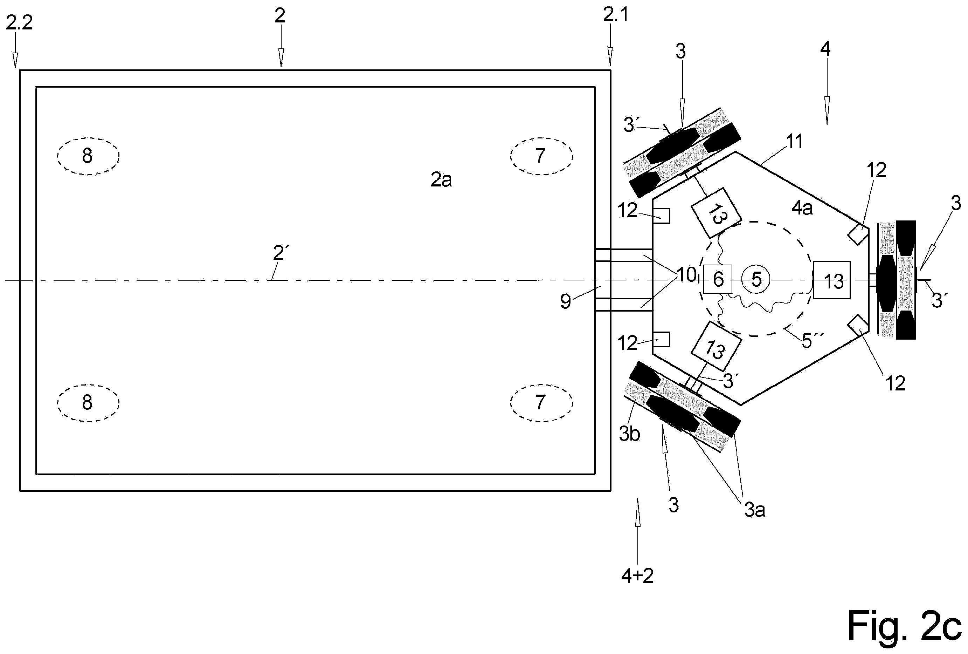

Jede Lager-Halbreihe 59 ist einer Fahrgasse 58 virtuell zugeordnet, wie am besten im mittleren Abstellbereichen 56 zu erkennen:
Denn innerhalb jeder Lager-Halbreihe 59 weisen die darauf abgestellten Anhänger 2a, 2b mit ihrem vorderen Ende 2.1, an dem - siehe **Figur 2c** - das mindestens eine, meist zwei quer zur Längsrichtung 2' eines Anhängers 2 beanstandete, Kupplungs-Gegenelemente 9 zum Ankuppeln eines Traktors 4 angeordnet sind, jeweils in die gleiche Richtung, nämlich zur zugeordneten Fahrgasse 58 hin, damit sie von dieser zugeordneten Fahrgasse 58 aus auch von einem Traktor 4 angefahren und angekuppelt werden können.

Wie im mittleren Abstellbereichen 56 dargestellt, setzt sich dieser Abstellbereich 56 aus je zwei mit ihren hinteren Enden gegeneinander weisenden Lager-Halbreihen 59 zusammen, von denen die in **Figur 2a** unteren Lager-Halbreihen 59 mit je zwei Lagerflächen 56-2a der darunter befindlichen Lagergasse 58 zugeordnet sind und die oberen Lager-Halbreihen 59, die jeweils nur aus einer einzigen Lagerfläche 56-2b bestehen, der darüber eingezeichneten Fahrgasse 58 zugeordnet sind.

Es versteht sich von selbst, dass eine Lagerfläche 56-2a, 56-2b, 56-2c, die nicht den äußeren Rand eines solchen Abstellbereiches 56 bildet, nur zugänglich ist, wenn die in dieser Lager-Halbreihe 59 vorgelagerte, zum Beispiel äußerste, Lagerfläche 56 leer ist. Ist dies nicht der Fall, muss ein auf dieser äußeren Lagerfläche 56 stehender Anhänger 2 zunächst von einem Traktor 4 entfernt werden durch Ankuppeln an dessen Frontseite, der Kupplungsseite 2.1, und von dem Traktor 4 entfernt werden, um den in dieser Lager-Halbreihe 59 dahinter stehenden Anhänger 2 ankuppeln zu können.

Zum Einlagern wird mittels je eines Traktors 4 ein Anhänger 2 auf einer der Lagerflächen 56-2a, 56-2b, 56-2c in einem Abstellbereich 56 abgestellt, die ihm meist von der Zentralsteuerung 1* des Flächen-Lagers 1 vorgegeben ist, die der Traktor 4 jedoch selbsttätig mittels seiner On-Bord-Steuerung 6 anfährt, während ihm die Zentralsteuerung 1* höchstens Etappenziele, meist nur das Endziel, der jeweiligen Fahrt vorgibt.

Zum Auslagern holt ein Traktor 4 aufgrund eines Fahrtauftrages von der Zentralsteuerung 1* einen abgestellten, meist wenigstens teilweise mit Produkten gefüllten, Anhänger 2 von einer vorgegebenen Lagerfläche 56 ab und verbringt diesen zu einer nicht dargestellten Kommissionierfläche, an der ein menschlicher Bediener 20 oder auch ein nicht dargestellter Roboter das gewünschte Produkt aus dem Anhänger 2 entnimmt und einem Kommissionier-Gebinde hinzugefügt.

Umgekehrt kann diese Kommissionierfläche natürlich auch dazu dienen, einen teilweise leeren Anhänger 2 mit von außen angelieferten Produkten zu beladen, also das Lager 1 nachzufüllen.

Um das Rangieren der Traktoren 4 und Gespanne 4+2 auf den Regalböden zu ermöglichen, und dennoch eine möglichst großen Anteil von Abstellbereichen 56 im Verhältnis zu den Verkehrsflächen 57 zu ermöglichen, sollten bestimmte Größenrelationen eingehalten werden, wie **Figur 2a** erkennen lässt:
Zunächst wird davon ausgegangen, dass die quer zur Längsrichtung 2' gemessene Breite eines Anhängers 2 größer ist als die Breite eines Traktors 4. Somit ist die Breite BG eines Anhängers 2 gleichzeitig auch die Breite BG eines Gespanns. Wäre der Traktor 4 breiter als der Anhänger 2, würde dessen Breite die Breite des Gespanns definieren.

Die in **Figur 2a** untere Fahrgasse 58, die in dieser Darstellung von rechts nach links verläuft zwischen zwei Abstell-Bereichen 56, besitzt eine nutzbare Breite nBFG, die der gesamten Breite BFG der Fahrgasse 58 entspricht, im Gegensatz zur Oberen Fahrgasse 58:
Dort stehen Tragsäulen 51 des Lager-Regals 50 in der Fahrgasse 58, und zwar in einer Reihe R2, die sich in Verlaufsrichtung der Fahrgasse 58 erstreckt, so dass dort die nutzbare Breite nBFG einer der Abstände dieser Säulen-Reihe zum benachbarten Abstell-Bereich 56 ist, insbesondere der größere dieser beiden Abstände.

Es liegt auf der Hand, dass die nutzbare Breite nBFG einer Fahrgasse 58 größer sein muss als die Breite BG eines Gespanns 4+2, damit ein solches Gespann 4+2 entlang der Fahrgasse 58 fahren kann.

Darüber hinaus muss die Breite BFG der Fahrgasse 58 größer sein als die Breite, die benötigt wird, damit ein Gespann 4+2 rückwärts in eine freie Lagerfläche z.B. 56-2a zwischen zwei in diesem Abstellbereich 56 bereits abgestellten Anhängern 2a hinein rangieren kann, wobei natürlich das Vorhandensein von Tragsäulen 51 und deren Positionierung in der Fahrgasse 58 zusätzlich berücksichtigt werden muss, sofern Tragsäulen 51 vorhanden sind.

Die Breite BFG einer Fahrgasse 58 muss deshalb aber nicht zwingend größer sein als die Diagonale DG eines Gespanns 4+2, die benötigt wird, damit ein Gespann in der Fahrgasse 58 wenden kann, insbesondere auch nicht zwingend geringer als die Länge LG eines Gespanns 4+2.

Abhängig von der Länge LG eines Gespanns, der Länge der Fahrgassen 58 und anderen Gegebenheiten kann es zur Optimierung der Effizienz eines solchen Flächenlagers 1 sinnvoll sein, ein solches Wenden nicht zuzulassen und die Fahrgassen 58 entsprechend schmal zu gestalten.

Bei mehreren in der Aufsicht betrachtet unterschiedlich großen Anhängern 2a, b, c innerhalb Etagen-Fahrfläche des Lagers 1 und damit einhergehend unterschiedlich großen einzelnen Lagerflächen gelten diese Aussagen primär für alle Arten von Anhängern 2, also auch für die in der entsprechenden Dimension größten Anhänger 2, zumindest jedoch für diejenigen Arten von Anhängern 2, die auf einer der beiden Seiten der entsprechenden Fahrgasse 58 abgestellt werden sollen.

Insbesondere gilt als für die Auslegung der Fahrgassen 58 relevante Länge LG eines Gespanns 4+2 die größte Länge eines Gespanns 4+2 aus den mit verschiedenen Größen von Anhängern 2a, b, c gebildeten Gespannen 4+2.

Insbesondere gilt als für die Auslegung der Fahrgassen 58 relevante Länge LG eines Gespanns 4+2 die größte Länge eines Gespanns 4+2 aus den mit verschiedenen Größen von Anhängern 2a, b, c gebildeten Gespannen 4+2.

Wie **Figur 2a** ferner, am besten in der Ausschnittvergrößerung, zeigt, sind die einzelnen Lagerflächen 56-2a, 56-2b, 56-2c in der Aufsicht betrachtet jeweils etwas größer als der darauf abzustellende Anhänger 2a, b, c, um sicherzustellen, dass der betreffende Anhänger trotz der nie ganz vermeidbaren Ungenauigkeiten beim Anfahren des Zieles oder Verfolgen seiner Fahrtroute zuverlässig innerhalb der dafür vorgesehenen Lagerfläche abgestellt wird.

Zusätzlich ist zu erkennen, dass die einzelnen Lagerflächen 56-2a nicht direkt aneinander angrenzend zueinander vorgesehen und festgelegt sind, sondern mit einem für die jeweilige Richtung unterschiedlichen Rangier-Abstand RAX, RAY. Dabei wird zumindest insbesondere beim Rangierabstand RAX zusätzlich unterschieden, ob es sich um einen Rangierabstand RAX1 zwischen zwei benachbarten Lagerflächen z.B. 56-2a oder um einen Rangierabstand RAX2 zwischen einer Lagerfläche 56-2a und einer benachbarten Tragsäule 51 handelt. Der Rangierabstand RAX2 ist dabei in der Regel größer als der Rangierabstand RAX1.

Diesen Rangierabstand kann ein Gespann 4 + 2 für das schräge Einfahren von der Lagergasse 58 aus in eine Lagerfläche zusätzlich nutzen.

Darunter im mittleren Abstellbereich 56 ist dargestellt, dass die Tragsäulen 51 einer in Y-Richtung verlaufenden Spalte von Tragsäulen 51 jeweils in einer - ebenfalls in Y-Richtung verlaufenden - Säulen-Furt SF stehen, die an der entsprechenden X-Position zwischen den Lager-Halbreihen 59 vorgesehen sind. Die Lager-Halbreihen 59 sind also in X-Richtung an den Positionen der Tragsäulen 51 mit einem solchen Abstand zueinander angeordnet sind, in denen sich die im Abstellbereich 56 befindlichen Tragsäulen 51 darin stehen. Dann befinden sich auch die in der angrenzenden Fahrgasse 58 stehenden Tragsäulen 51 jeweils vollständig außerhalb der in Längsrichtung der Lager-Halbreihen verlängerten Breiten BLF der Lagerflächen.

Dies behindert das Einparken und Ausparken so gut wie nicht mehr, kostet aber zusätzlichen, nicht nutzbaren, Platz in dem Abstellbereich 56.

Ferner lässt **Figur 2a** auch die Relationen zwischen den freien Säulenabständen fSAX, fSAY und der Größe und Anordnung der Lagerflächen erkennen:
Der mittlere Abstellbereich 56 zeigt, dass der freie Säulenabstand fSAX in Längsrichtung X identisch ist mit der doppelten Breite BLF einer Lagerfläche 56-2a als auch 56-2b, die gleich breit sind, zuzüglich des einen Rangierabstandes RAX1 zwischen zwei Lagerflächen 56-2b zum Glück zuzüglich zweier Rangierabstände RAX2 zu dem jeweils einer der benachbarten Tragsäulen 51 in. Dies spart nicht nutzbaren Raum innerhalb der Abstellbereiche 56.

Ein Gespann 4+2 bestehend aus einem Traktor 4 und einem daran angekuppelten Anhänger 2 zeigt **Figur 2b** in der Seitenansicht und **Figur 2c** von oben.

Aus **Figur 2b** ist ersichtlich, dass im angekuppelten Zustand die im vorderen Bereich 2.1, also nahe des Kupplungs-Gegenelementes 9 des Anhängers 2, vorhandene eine oder zwei Stützfüße 7, mit denen sich der abgekuppelte Anhänger 2 auf dem Untergrund abstützt, vom Untergrund abgehoben sind, und der Anhänger 2 mit seinem im hinteren Bereich 2.2 vorhandenen einer oder zwei Rollen 8 auf dem Untergrund abrollt, gezogen von dem angekuppelten Traktor 4.

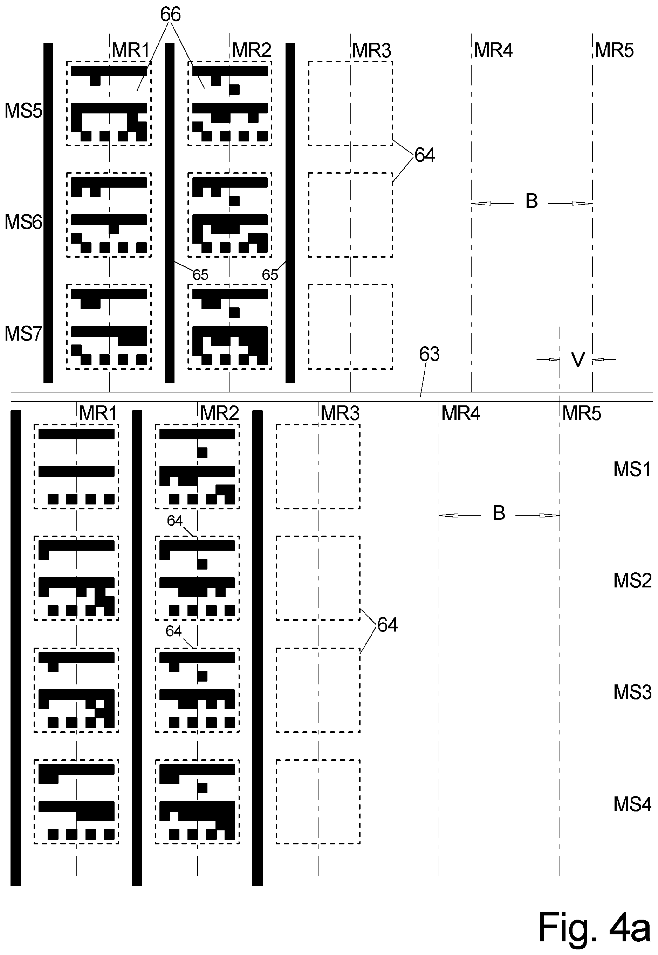

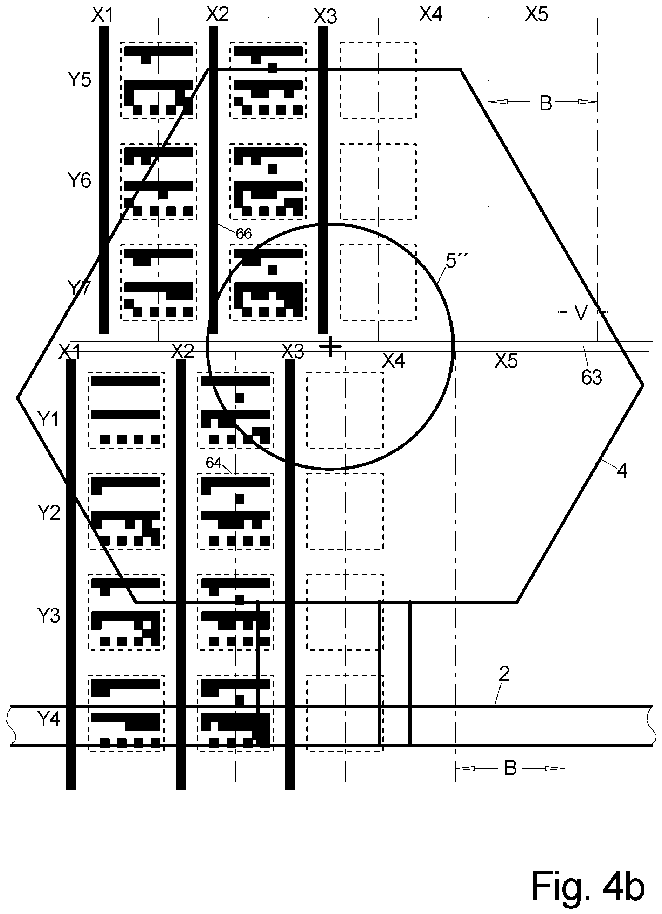

Dieser besitzt im Fall der **Figuren 2b****,** **c** **und** **4** in der Aufsicht betrachtet ein etwa 3-eckiges, wegen der gekappten Ecken eher 6-eckiges, Chassis 11, im Fall der **Figur 2a** ein in der Aufsicht betrachtet etwa halbrundes Chassis 11, an dem über den Umfang verteilt drei jeweils über einen Motor 13 gesteuert antreibbare Räder 3 befestigt sind, deren Radachsen 3' in der Aufsicht betrachtet jeweils in einer anderen Richtung verlaufen, insbesondere sich in einem gemeinsamen geometrischen Punkt treffen.

Dabei handelt es sich um sogenannte um omnidirektionale Räder 3, die sowohl quer zur Richtung ihrer Radachse 3' als auch in Richtung der Radachse 3' als auch in jedem beliebigen Winkel hierzu auf dem Untergrund abrollen können, indem sie über den Umfang verteilt und in axialer Richtung zwei beanstandeten Ebenen mehrere, meist tonnenförmige, Radwalzen 3a, b aufweisen, die jeweils um ihre Walzenachse drehbar in einem Rad-Grundkörper gelagert sind.

Bei entsprechender Ansteuerung der Räder über die Onbord-Steuerung 6 des Traktors 4 kann der Traktor 4 somit nicht nur in jede beliebige Richtung fahren, sondern auch sehr kleine Kurven-Radien fahren, insbesondere auf der Stelle drehen, zumindest wenn kein Anhänger 2 an ihm angekuppelt ist.

Damit die Traktoren 4 und Gespanne 4+2 von einer Etage 50a in eine benachbarte Etage 50b gelangen können, ist eine Höhen-Transfervorrichtung 61 notwendig.

Bei dieser Bauform - wie in der Seitenansicht der **Figur 2b** dargestellt - besteht die Höhen-Transfervorrichtung 61 aus einer einfachen Rampe 62 anstelle eines Teils einer Etagen-Fläche, über die ein Traktor 4 oder ein Gespann 4+2 in die nächst höhere oder tiefer liegende Etage gelangen kann.

Statt einer solchen Rampe 62 ist auch ein hier nicht dargestellter Aufzug als Höhen-Transfervorrichtung 61 möglich, der insbesondere von den Traktoren 4 selbst angefordert werden kann.

Die Traktoren 4 navigieren anhand von auf der Fahrfläche 50"a aufgebrachten Navigation-Markierungen 66, die der Traktor 4 mittels einer gegen diese Fahrfläche, also nach unten, gerichteten Boden-Kamera 5 abtastet, welche mit der Onbord-Steuerung 6 signaltechnisch verbunden ist.

Die Boden-Kamera 5 besitzt auf der Bodenfläche ein Sichtfeld 5', welches vorzugsweise mindestens so groß ist, dass die Markierungsflächen 64 von vier im Viereck angeordneten Markierung 66 darin Platz findet.

Gleichzeitig ist der Abstand der einzelnen Markierungen 66 sowohl in Richtung der Markierungs-Reihen MR als auch in Richtung der Markierungs-Spalten MS so gering, dass bei einer teilweisen Sichtbarkeit von 2, zumindest von 4, benachbarten Markierungen 66 im Sichtfeld 5' die Onbord-Steuerung 6 in der Lage ist, zu erkennen, um welche Markierungen es sich bei den beiden teilweise im Sichtfeld 5' sichtbaren Markierungen 66 handelt.

Jeder Regalboden 55 ist so mit Navigations-Markierungen 66 bedruckt, dass die On-bord-Steuerung 6 bei Auswertung des Bildes der Kamera 5 weiß, an welcher Stelle des Regalbodens 55 sich die Boden-Kamera 5 und damit der gesamte Traktor 4 befindet, und auch in welcher in der Aufsicht betrachteten Drehlage zu den Navigations-Markierungen, also insbesondere zur Richtung deren Reihen und Spalten, egal ob sich im Sichtfeld 5' der Kamera 5 nur eine Markierung vollständig oder 2 bis 4 Markierungen nur teilweise befinden.

Eine Möglichkeit, um dies zu realisieren, besteht darin, dass keine zwei gleichen Markierungen 66 auf demselben Regalboden 55 vorhanden sind.

Wenn beim Aufsetzen eines Traktors 4 auf einem Regalboden 55 der Onbord-Steuerung 6 des Traktors 4 mitgeteilt wird, um welchen Regalboden es sich dabei handelt, kennt die Steuerung 6 des Traktors 4 von da ab immer den aktuellen Standort des Traktors 4 im Lager 50, da er das Überfahren jeder Fuge 63 zwischen zwei Regalböden 55 registriert anhand der spezifischen Abfolge von zwei Markierungen M, von denen sich eine vor und eine nach der Fuge 63 befindet, da die Onbord-Steuerung 6 die Anordnung jeder der einzelnen Markierungen 66 auf einem Regalboden 55 kennt.

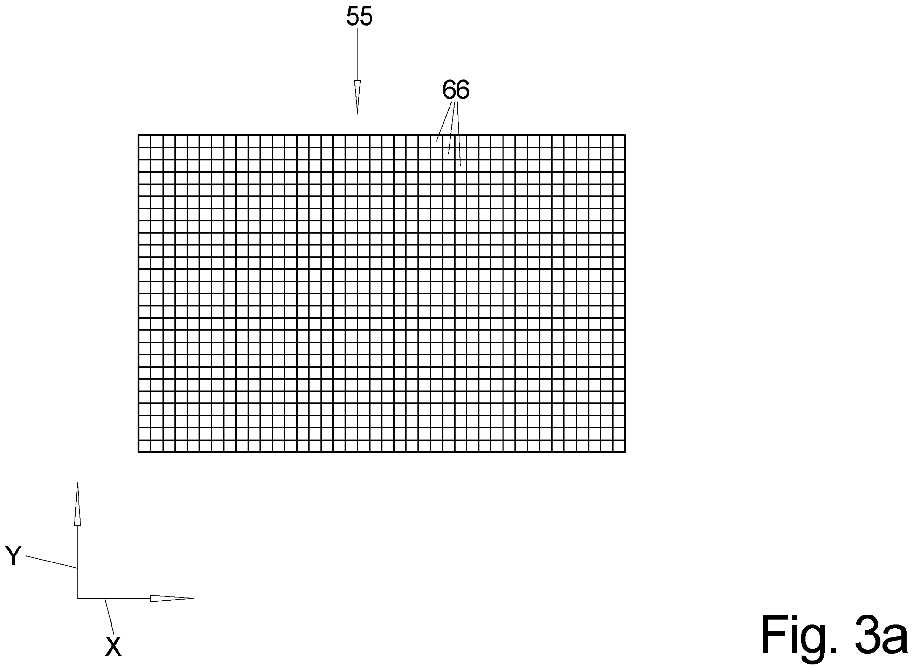

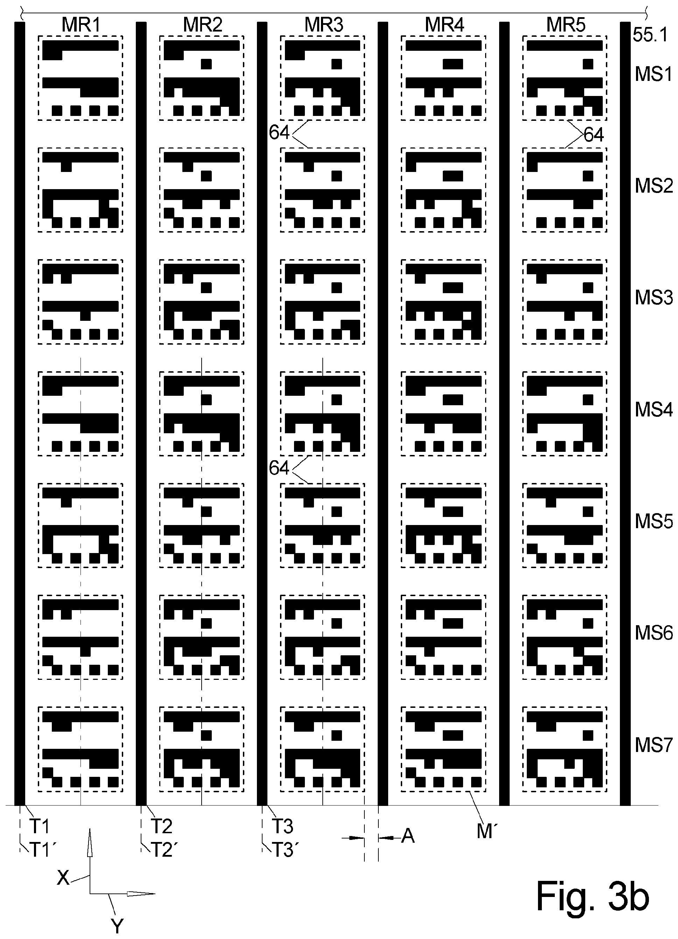

Die Navigations-Markierungen 66 - die jeweils innerhalb einer vorzugsweise rechteckig ausgebildeten Markierungs-Fläche 64 angeordnet sind - sind über die gesamte Fahrfläche, also über jeweils den gesamten Regalboden 55, vorhanden und darauf in einem bekannten, in seiner Relativlage zu den Abmessungen des Regalbodens 55 definierten, Muster, vorzugsweise matrixförmig in Markierungs-Reihen MR1, MR2, MR3 usw. und dazu parallelen Markierungs-Spalten MS1, MS2, MS3 usw. angeordnet, wie am besten in der Darstellung der **Figur 3a****,** in der die Markierungen und deren Anordnung zueinander angedeutet sind und der Ausschnittvergrößerung in **Figur 3b****,** in der die realen Markierungen 66 wiedergegeben sind, dargestellt.

Wie die Ausschnittvergrößerung der **Figur 3b** zeigt, sind zwischen den in einer der Verlaufs-Richtungen von Reihen und Spalten, insbesondere in nur einer dieser Verlaufs-Richtungen, insbesondere zwischen den Reihen MR1, MR2, MR3 von Navigations-Markierungen M, Trennbalken T1, T2 vorhanden.

Die - in diesem Fall rechteckigen - Navigations-Markierungen 66 als auch insbesondere deren Markierungs-Flächen 64 halten vorzugsweise zu diesen Trennbalken T1, T2 als auch quer dazu, in Richtung der Reihen, also in Verlaufsrichtung der Trennbalken T1, T2, zueinander einen vorzugsweise immer gleich bleibenden Markierungs-Abstand A ein.

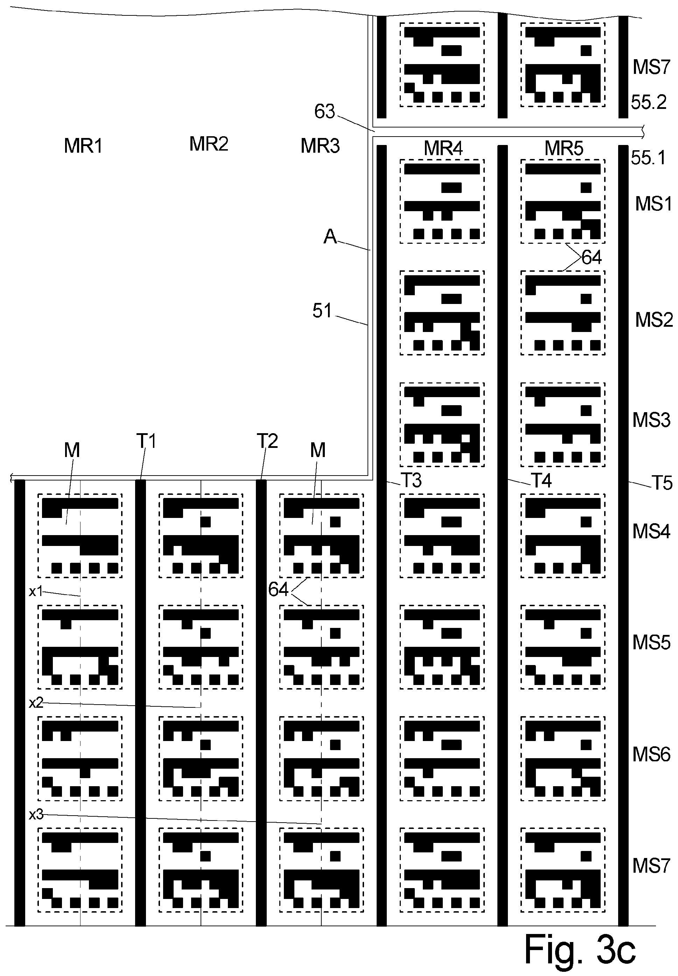

**Figur 3c** zeigt die Situation zweier Regalböden 55.1, 55.2 und damit der darauf aufgebrachten Markierungen 66 an einer der vertikal verlaufenden Tragsäulen 51:
Die hinsichtlich ihrer Hauptfläche, also ihrer Fläche mit der größten Erstreckung, meist rechteckigen Regalböden 55 können mit einer ihrer vier in der Aufsicht betrachteten äußeren Kanten, also Schmalseiten, einer der Außenflächen der Tragsäule 51 gegenüberliegen, was dann aber zumindest in einer der horizontalen Richtungen für die Traktoren 4 unüberwindbar große Lücken zwischen den Regalböden 55 ergeben würde.

Deshalb wird in aller Regel wie in **Figur 3c** dargestellt hierfür in der jeweiligen Ecke des Regalbodens 55.1, 55.2 eine Eckaussparung 65 angefertigt, um darin einen Teil, meist etwa 1/4, des horizontalen Querschnittes der Tragsäule 51 aufzunehmen, um die Fuge 63 zwischen zwei solcher aneinandergrenzender Regalböden 55.1, 55.2 gering und über fahrbare für die Traktoren 4 zu halten.

Dabei besteht in aller Regel zwischen der in der Aufsicht betrachteten Außenumfangskontur des Regalbodens im Bereich der Eckaussparung 65 und der Außenumfangskontur der Tragsäule 51 ein Abstand A, der nicht in allen Fällen gleich groß ist, und auch an einigen Stellen Null betragen kann, da allein schon aus Montagegründen die Außenkontur des Regalbodens kleiner sein muss als der Freiraum zwischen benachbarten Tragsäulen 51, und weiterhin Fertigungs-Ungenauigkeiten hinzu kommen.

Deshalb stellt der in **Figur 3c** dargestellte Zustand, in dem die quer zur Richtung der Fuge 63 verlaufenden Reihen MR1, MR2 usw. der Reihen von Markierungen 66 der beiden aneinander grenzenden Regalböden 55.1, 55.2 exakt zueinander fluchten, den Idealfall dar.

In der Praxis dagegen liegt fast immer - wie in **Figur 4a****,** **b** dargestellt - ein Versatz V zwischen den einander entsprechenden Reihen MR1, MR2 usw. der beidseits der quer dazu verlaufenden Fuge 63 zweier benachbarter Regalböden 55.1, 55.2 vor.

Aus Übersichtlichkeitsgründen sind in diesen beiden **Figuren 4a****,** **b** teilweise die realen Markierungen 66 nicht mehr dargestellt, sondern lediglich noch deren Markierungs-Flächen 64 oder nur noch die durch die Mitten der in einer Reihe von Markierungs-Flächen 64, zum Beispiel MR3, quer zur Verlaufsrichtung der Fuge 63 verlaufenden Mittellinien MR3', MR4' usw. dargestellt.

Als Spur-Breite B wird dabei der Abstand der parallel zueinander verlaufenden Mittellinien MR3', MR4' definiert, wobei es eine analoge, aber nicht unbedingt identische, Spur-bereite zwischen den parallel zueinander verlaufenden Mittellinien MS3', MS4' der Spalten MS1, MS2 usw. gibt.

### BEZUGSZEICHENLISTE

- 1: Lager, Flächen-Lager
- 1*: Zentralsteuerung
- 2: Anhänger
- 2': Längsrichtung
- 2": Grundfläche, Ladefläche
- 2.1: vorderes Ende, Kupplungs-Ende, Kupplungs-Seite
- 2.2: hinteres Ende, hinterer Endbereich
- 3: Rad
- 3': Radachse
- 3a, b: Walze
- 4: Traktor
- 4': Geradeaus-Fahrtrichtung
- 4a: Kupplungsseite, Heck
- 4b: Frontseite
- 4+2: Gespann
- 5: Bodenkamera
- 5': Kamera-Längsachse
- 5": Sichtfeld
- 5*: Kamera-Mitte, Bezugspunkt
- 6: Onbord-Steuerung
- 7: Stützfuß
- 8: Rolle
- 9: Gegenelement
- 10: Kupplungselement
- 11: Chassis
- 12: Sensor, Kamera
- 13: Motor

- 20: Bediener

- 50: Lagerregal
- 50a, b: Etage
- 50"a, b: Etagen-Fahrfläche
- 51: Tragsäule
- 52: Längstraverse
- 53: Quertraverse
- 54: Zwischentraverse
- 55: Regalboden
- 55.1, 55.2: Regalboden
- 55a-c: Kante
- 56: Abstellbereich
- 56-2: Lagerfläche
- 57: Verbindungsfläche
- 58: Fahrgasse
- 59: Lagerreihe
- 60: Tragwerk
- 61: Höhen-Transfervorrichtung
- 62: Rampe
- 63: Fuge
- 64: Markierungs-Fläche
- 65: Eckaussparung
- 66: Navigations-Markierung

- A: Abstand
- B: Spur-Breite
- BFG: Breite Fahrgasse
- nBFG: nutzbare Breite Fahrgasse
- BG: Breite Gespann
- BLF: Breite Lagerfläche
- LLF: Länge Lagerfläche
- LG: Länge Gespann
- L'G: Längsrichtung Gespann, Gespannrichtung
- DG: Diagonale Gespann
- SA1: Säulenabstand in X
- fSA1: freier Säulenabstand in X
- SA2: Säulenabstand in Y
- fSA2: freier Säulenabstand in Y
- RAX: Rangierabstand
- RAY: Rangierabstand
- R1, R2: Reihe
- S1, S2: Spalte
- T1, T2: Trennbalken
- T1', T2': Trennlinie
- V: Versatz
- X: Längsrichtung
- Y: Querrichtung
- Z: Vertikale

## Patentansprüche

1. **Verfahren** zum Betrieb eines Flächen-Lagers (1) mit
- einer Zentralsteuerung (1*),
- einem Lagerregal (50) mit mindestens einer, besser mehreren in der Höhe zueinander beabstandeten, von einem Tragwerk (60) getragenen, Etagen (50a, b),
- dessen Etagen-Fahrflächen (50"a, b) durch die Oberseiten von mehreren abstandslos innerhalb einer Etage (50a) aneinander anschließenden Regalböden (55) gebildet sind,
- unbemannten, autonom fahrenden Traktoren (4) mit einer Onbord-Steuerung (6) und von diesen an-/abkuppelbaren Anhängern (2), die auf den Regalböden (55) verfahrbar sind oder abgestellt sind,
wobei
- der Onbord-Steuerung (6) eines Traktors (4) ein Fahrt-Ziel für den Traktor (4) von der Zentralsteuerung (1*) mitgeteilt wird,
wobei
der Traktor (4) seinen Weg von seiner momentanen Position zu dem Fahrt-Ziel selbst mittels seiner Onbord-Steuerung (6) in Form einer Soll-Fahrtroute festlegt und zum Ziel fährt, indem seine Onbord-Steuerung (6)
- entweder von der Zentralsteuerung (1*) mehrere potentielle Soll-Fahrtrouten mitgeteilt erhält und eine davon auswählt,
- oder von der Zentralsteuerung (1*) frei befahrbare Flächen sowie hilfreiche Hinweise zum Erstellen einer Soll-Fahrtroute mitgeteilt erhält und die Onbord-Steuerung (6) die Soll-Fahrtroute festlegt unter Berücksichtigung dieser Hinweise,
- oder von der Zentralsteuerung (1*) nur frei befahrbare Flächen mitgeteilt erhält und die Onbord-Steuerung (6) die Soll-Fahrtroute innerhalb der frei befahrbare Flächen festlegt,
**dadurch gekennzeichnet, dass**
- der Traktor (4) mit und ohne angekoppelten Anhänger (2) auf seiner Fahrt zum Ziel mehrfach seine momentane Ist-Position bestimmt und mit seiner Soll-Fahrtroute vergleicht und bei Abweichung die Differenz ausgleicht, indem er sich der Soll-Fahrtroute mehr annähert, indem er zu dieser fährt, und
- der Traktor (4) mit und ohne angekoppelten Anhänger (2) die entlang seiner Soll-Fahrtroute bereits hinter ihm liegenden Bereiche von frei befahrbaren Flächen an die Zentralsteuerung (1*) zum Befahren durch andere Traktoren (4) bereits frei gibt, bevor er sein Ziel erreicht hat.

2. Verfahren nach Anspruch 1, wobei
- die Regalböden (55) auf der Oberseite Navigations-Markierungen (66) tragen, deren Position und Drehlage relativ zu dem betreffenden Regalboden (55) der Onbord-Steuerung (6) bekannt sind oder von dieser ermittelt werden kann,
- der Traktor (4) eine mit seiner Onbord-Steuerung (6) gekoppelte, gegen den Boden gerichtete, Bodenkamera (5) zum Abtasten und Identifizieren der Navigations-Markierungen (66) aufweist,
- der Onbord-Steuerung (6) zumindest beim 1. Aufsetzen des Traktors (4) auf einen Regalboden (55) die Position dieses Regalbodens (55) im Lager-Regal (50) mitgeteilt wird, insbesondere in Form der Identität oder Nummer dieses Regalbodens (55),
**dadurch gekennzeichnet, dass**
- entweder der Onbord-Steuerung (6) das Fahrt-Ziel in Form des Ziel-Regalbodens (55.x) und der dortigen Ziel-Markierung angegeben wird
- oder ein Absolut-Koordinaten-System zumindest über die gesamte Etage, insbesondere das gesamte Lager-Regal existiert und die Lage jeder Navigations-Markierung (66) jedes Regalbodens (55) in Absolut-Koordinaten sowohl in der Zentralsteuerung (1*) als auch der Onbord-Steuerung (6) hinterlegt ist, und der Onbord-Steuerung (6) das Fahrt-Ziel in Form der Absolut-Koordinaten, insbesondere den Absolut-Koordinaten der Ziel-Markierung, angegeben wird.

3. Verfahren nach einem der vorhergehenden Ansprüche,
**dadurch gekennzeichnet, dass**
- die Onbord-Steuerung (6) das Überfahren einer Fuge von einem Regalboden (55.1) zu einem benachbarten Regalboden (55.2) und damit den neuen aktuellen Regalboden (55.2) ermittelt unter Berücksichtigung des bisherigen Regalbodens (55.1), der Fahrtrichtung des Traktors (4) unmittelbar vor dem Überfahren der Fuge,
- der Kenntnis der Position der auf beiden Regalböden (55.1, 55.2) Markierungen (M),
insbesondere
- für das Ermitteln des neuen, aktuellen Regalbodens (55.2) als zusätzliche Plausibilität-Kontrolle
- die Anzahl der Rad-Drehungen und damit die zurückgelegte Fahrt-Strecke zwischen der letzten ermittelten Position auf dem alten Regalboden (55.1) und dem neuen Regalboden (55.2) berücksichtigt wird,
- die verstrichene Fahr-Zeit zwischen der letzten ermittelten Position auf dem alten Regalboden (55.1) und dem neuen Regalboden (55.2) berücksichtigt wird.

4. Verfahren nach einem der vorhergehenden Ansprüche,
**dadurch gekennzeichnet, dass**
- zumindest der Großteil der Navigations-Markierungen (66) auf den, insbesondere allen, Regalböden (55) identisch angeordnet ist,
- insbesondere die Navigations-Markierungen (66) matrixförmig, insbesondere in Markierungs-Reihen (MR1, MR2 usw.) und Markierung-Spalten (MS1, MS2 usw.), insbesondere parallel zu den Kanten eines in der Aufsicht rechteckigen Regalbodens (55), angeordnet sind,
und/oder
- insbesondere die Lage einer Navigations-Markierung (66) in Form der Lage eines, insbesondere einzigen, Markierung-Bezugspunktes (MBP) dieser Markierung (66) in Absolut-Koordinaten hinterlegt ist,
wobei insbesondere
- zwischen, und insbesondere im Abstand zu, den Reihen (MR1, MR2,) von Navigations-Markierungen (66) Trennbalken (T1, T2) verlaufen,
- deren Längs-Kanten vorzugsweise von der Onbord-Steuerung (6) zur Errechnung einer einzigen, die Richtung des Trennbalkens (T1, T2) repräsentierenden, Trennlinie (T'1, T'2) verwendet werden, die insbesondere in der Mitte zwischen deren beiden Längs-Kanten liegt,
- insbesondere die Richtung der Trennbalken oder Trennlinien zum Bestimmen der Ausrichtung, also der Lage, des Traktors (4) zu einer der Markierungen (66) von der Onbord-Steuerung (6) verwendet wird.

5. Verfahren nach einem der vorhergehenden Ansprüche,
**dadurch gekennzeichnet, dass**
die Onbord-Steuerung (6) eine elektronische Steuerung ist und mehrere Steuerungs-Ebenen umfasst, nämlich
- eine Planungs-Ebene, die dies Soll-Fahrtroute festlegt und insbesondere mehrfach, vorzugsweise ständig, aktualisiert und/oder optimiert,
- eine Fahr-Ebene, die das Fahren des Traktors möglichst entlang der Soll-Fahrtroute durchführt, die aktuelle Ist-Position des Traktors (4) mit seiner aktuellen Soll-Position vergleicht und gegebenenfalls ausgleicht und die aktuelle Ist-Position an die Planungsebene meldet,
- eine Orientierungs-Ebene, die mittels insbesondere einer Bodenkamera die Markierungen (66) liest und die Ist-Lage des Traktors (4) ermittelt und an die Fahr-Ebene meldet
und/oder
- die Onbord-Steuerung (6) in der Lage ist, ein Gespann (4+ 2) hinsichtlich Position und Drehlage zu einem Ziel zu führen unabhängig davon, ob sich das Gespann dabei im Zug-Betrieb oder im Schiebe-Betrieb bewegt.

6. Verfahren nach einem der vorhergehenden Ansprüche,
wobei das Tragwerk (60)
- aufrecht, insbesondere lotrecht, stehende, sich insbesondere über die gesamte Höhe des Lagerregals (50) erstreckende, Tragsäulen (51) umfasst, die insbesondere in in Längsrichtung (X) sowie in Querrichtung (Y) des Lagerregals (50) verlaufenden, geraden Reihen in (X1, X2 usw.) und Spalten (Y1, Y2 usw.) angeordnet sind,
- innerhalb derer die Tragsäulen (51) in gleichen Säulen-Abständen (SAX, SAY) zueinander angeordnet sind,
**dadurch gekennzeichnet, dass**
- die Säulen-Abstände (SAX oder SAY) in einer, insbesondere nur in einer, der beiden Richtungen (X, Y) auf die Grundflächen der Anhänger (2) und/oder der dafür vorgesehenen Lagerflächen (56-2) und/oder der Grundflächen der Gespanne (4 + 2) abgestimmt sind,
insbesondere
- die X-Richtung der Reihen der Tragsäulen (51) der Erstreckungsrichtung (58') der Fahrgassen (58) entsprechend festgelegt wird und
- der Säulen-Abstand (SAX) in X-Richtung auf die Breite der vorgesehenen Lagerflächen (56a) und/oder der darauf abzustellenden Anhänger (2) abgestimmt wird,
insbesondere
- in Verlaufsrichtung (58') der Fahrgassen (58), insbesondere in X-Richtung, der freie Abstand (fSAX) zwischen benachbarten Tragsäulen (51) in einer Reihe X so festgelegt wird, dass er das ganzzahlige Mehrfache der Summe aus der Breite (BLF), einer Lagerfläche (56-2) und eines Rangierabstandes (RA1, RA2), in dieser Richtung um maximal 30 %, besser maximal 20 %, besser maximal 10 % besser maximal 5 % besser maximal 3 % einer einzigen solchen Summe überschreitet.

7. Verfahren nach einem der vorhergehenden Ansprüche,
**dadurch gekennzeichnet, dass**
bei in den Abstellbereichen (56) stehenden Tragsäulen (51) die Lagerflächen (56-2) relativ zu den Positionen der Tragsäulen (51) so festgelegt werden, dass
- entweder die Tragsäulen (51) einer, insbesondere in X-Richtung verlaufenden, Reihe von Tragsäulen (51) jeweils in einer, insbesondere in Y-Richtung verlaufenden, Säulen-Furt (SF1) (definieren) zwischen zwei Lager-Halbreihen (59) stehen
und/oder
- im Fall von in den Fahrgassen (58) stehenden Tragsäulen (51) die Positionen der Lagerflächen (56-2) relativ zu den Positionen der Tragsäulen (51) automatisch so festgelegt werden, dass eine in einer Fahrgassen (58) stehende Reihe von Tragsäulen (51) zumindest von einem der beiden benachbarten Abstellbereiche (56) in Y-Richtung weiter entfernt ist als die Breite eines Gespanns (4+2) mit einem in den Abstellbereichen (56) beidseits dieser Fahrgasse (58) zum Abstellen vorgesehenen Anhänger (2) beträgt.

8. Verfahren nach einem der vorhergehenden Ansprüche,
**dadurch gekennzeichnet, dass**
- entweder die Breite (BFG) einer Fahrgasse (58) maximal um 20 cm, besser nur um 10 cm besser nur um 5 cm größer automatisch festgelegt wird als die zum Wenden eines Gespanns (4+2) nach einem der vorhergehenden Ansprüche in der Fahrgasse (58) benötigte Breite an Fahrgasse, insbesondere als die in der Aufsicht betrachtete größte Diagonale (DG) (definieren) eines Gespanns (4+2),
- oder die Breite (BFG) einer Fahrgasse (58) geringer automatisch festgelegt wird als die zum Wenden eines Gespanns in der Fahrgasse (58) benötigte Breite an Fahrgasse, insbesondere als die in der Aufsicht betrachtete größte Diagonale (DG) eines Gespanns, insbesondere geringer als die Länge (LG) eines Gespanns (4+2),
- jedoch größer als die Breite der Fahrgasse (58) automatisch festgelegt wird, die benötigt wird, damit der Traktor (4) des Gespanns den Anhänger (2) in eine freie Lagerposition zwischen zwei auf dem angrenzenden Abstellbereich abgestellten Anhängern (2) hinein rangieren kann.

9. Verfahren nach einem der vorhergehenden Ansprüche, wobei
- mehrere Arten (2a, b, c) von hinsichtlich ihrer Grundflächen unterschiedlich großen Anhängern (2) im Lager-Regal (50) vorhanden sind,
- insbesondere die Grundflächen der verschiedenen Arten von Anhängern (2) alle die gleiche Breite besitzen,
**dadurch gekennzeichnet, dass**
- unterschiedlich große Lagerflächen (56-2a, 56-2b, 56-2c), die an die Grundflächen der verschiedenen Arten (2a, b, c) von Anhängern (2) angepasst sind, und deren Anordnung im Lager-Regal (50) automatisch festgelegt werden,
- abhängig vom vorgegebenen Verhältnis der Anzahl der verschiedenen Arten (2a, b, c) von Anhängern (2) im Lager-Regal (50).
(Mehrere Breiten von Anhängern:)

10. Verfahren nach einem der vorhergehenden Ansprüche, wobei
- mehrere Arten (2a, b, c) von hinsichtlich ihrer Grundflächen unterschiedlich großen Anhängern (2) im Lager-Regal (50) vorhanden sind,
- die Grundflächen der verschiedenen Arten von Anhängern (2) verschiedene Breiten besitzen,
**dadurch gekennzeichnet, dass**
- entweder zwischen zwei in X-Richtung beabstandeten Säulen meist die in X-richtung gleiche Abfolge von Halbreihen mit jeweils unterschiedlicher Breite ihrer Lagerflächen festgelegt werden,
- oder der Säulen Abstand (SAX) in X-Richtung in Relation zu den unterschiedlichen Breiten der Lagerflächen so festgelegt wird, dass ein ganzzahliges x-faches der größeren Breite von einem höheren ganzzahligen y-fachen der geringeren Breite um nicht mehr als 20 %, insbesondere um nicht mehr als 10 %, abweicht,
- insbesondere x +1 =y gilt
und/oder
- in den zueinander fluchtenden Lager-Halbreihen (59), insbesondere den Abstell-Bereichen (56), beidseits einer Lagergasse (58) nur Lagerflächen (56-2a, 56-2b, 56-2c) mit der gleichen Breite, insbesondere nur eine Art von Lagerflächen (56-2a, 56-2b, 56-2c) automatisch festgelegt wird.

11. Verfahren nach einem der vorhergehenden Ansprüche, wobei
- ab einer Annäherung des Traktors (4) bis zu einer Peil-Entfernung der Traktor (4) mittels eines berührungslos arbeitenden, insbesondere optischen, Sensors anhand einer Identifikation-Markierung den Anhänger (2) identifiziert und auch dessen Entfernung und Lage zum Traktor (4) ermittelt,
- die quer zur Fuge (63) zwischen zwei benachbarten Regalböden (55.1, 55.2) verlaufenden Spalten oder Reihen von Navigations-Markierungen (66) an der Fuge (63) einen Versatz (V) zueinander aufweisen können,
- die Ist-Position jedes Regalbodens (55) innerhalb des Lager-Regals (50) der Zentralsteuerung (1 *) bekannt ist
- und damit auch die Größe des Versatzes (V) in Richtung der Fuge (63) sowohl absolut zum absoluten Koordinatensystem als auch relativ zu wenigstens einem der benachbarten Regalböden (55),
**dadurch gekennzeichnet, dass**
- die Onbord-Steuerung (6) in der Regel davon ausgeht, dass jeder Regalboden (55) sich innerhalb des Lager-Regals (50) exakt an seiner vorgesehenen Soll-Position befindet,
- jedoch davon ausgenommen in Fällen, in denen der Traktor (4) sich mit seiner Bodenkamera über einem ersten Regalboden (55.1) befindet und von dort aus einen Anhänger (2) zum Zwecke des Ankoppelns anpeilen muss, der sich auf einem benachbarten zweiten Regalboden (55.2) befindet, von den absoluten Ist-Koordinaten der Markierungen auf dem zweiten Regalboden (55.2) ausgeht,
insbesondere
- hierfür die Onbord-Steuerung (6) von der Zentralsteuerung den relativen Versatz (V) zwischen dem ersten Regalboden (55.1) und dem zweiten Regalboden (55.2) mitgeteilt erhält und
- nach dem Überfahren der Fuge (63) diesen relativen Versatz (V) von den sich zu den Markierungen (66) auf dem zweiten Regalboden (55.2) hinterlegten absoluten Koordinaten, den absoluten Soll-Koordinaten, abzieht.

12. **Flächen-Lager** (1), mit
- einem Lagerregal (50) mit mindestens einer von einem Tragwerk (60) getragenen Etage (50a, b),
- dessen Etagen-Fahrfläche (50"a, b) durch die Oberseiten von mehreren innerhalb einer Etage (50a, b) aneinander anschließenden Regalböden (55) gebildet sind,
- unbemannten, autonom fahrenden Traktoren (4) und von diesen automatisch an-/abkuppelbaren Anhängern (2), die auf den Regalböden (55) verfahrbar sind oder auf jeweils einer virtuell festgelegten Lagerfläche (56-2) abgestellt sind,
- einer Zentralsteuerung (1*), die mit allen Traktoren (4) und allen gesteuert bewegbaren Teilen des Lagers (1) drahtlos in Kontakt steht,
wobei
die Etagen-Fahrflächen (50"a, b) virtuell unterteilt sind in
- Abstellbereiche (56) mit einer Vielzahl von Lagerflächen (56-2) zum Abstellen von Anhängern (2),
- Verkehrsflächen zum Entlangfahren von Traktoren (4) oder Gespannen (4 + 2),
wobei
- die Verkehrsflächen Fahrgassen (58) umfassen, die insbesondere gerade und/oder insbesondere parallel zueinander verlaufen,
- die Verkehrsflächen Verbindungsflächen (57) umfassen, die insbesondere die Mündungen der Fahrgassen (58) miteinander verbinden und dem Anfahren der Fahrgassen (58) dienen,
- von den Fahrgassen (58) aus sich jeweils seitlich, insbesondere beidseits, die Abstellbereiche (56) erstrecken, deren Tiefe lotrecht zur Erstreckungsrichtung (58') der Fahrgassen (58) insbesondere ein Mehrfaches der Länge eines Anhängers (2) betragen.
**dadurch gekennzeichnet, dass**
- die Traktoren (4) so ausgebildet sind, dass der Traktor (4) mit und ohne angekuppelten Anhängern (2) auf seiner Fahrt zum Ziel mehrfach seine momentane Ist-Position bestimmt und mit seiner Soll-Fahrtroute vergleicht und bei Abweichung die Differenz ausgleicht indem er zur Soll-Fahrtroute fährt, und
- der Traktor (4) mit und ohne angekoppelten Anhänger (2) die entlang seiner Soll-Fahrtroute bereits hinter ihm liegenden Bereiche von frei befahrbaren Flächen an die Zentralsteuerung (1*) zum Befahren durch andere Traktoren (4) bereits frei gibt, bevor er sein Ziel erreicht hat.

13. Lager nach Anspruch 12,
**dadurch gekennzeichnet, dass**
- eine Lagerfläche (56-2) in beiden horizontalen Richtungen größer ist als die Grundfläche (2") des darauf abzustellenden Anhängers (2), insbesondere in der Breite des Anhängers um maximal 30 mm, besser maximal 20 mm, besser maximal 15 mm größer ist
und/oder
- die beidseits der Fahrgasse (58) vorgesehenen Lager-Halbreihen (59) in Querrichtung zur Erstreckungsrichtung (58') der Fahrgasse (58) zueinander fluchten
und/oder
- die benachbarten oder allen Fahrgassen (58) zugeordneten Lager-Halbreihen (59) in Querrichtung zur Erstreckungsrichtung (58') der Fahrgassen (58) zueinander fluchten
und/oder
- innerhalb der Abstell-Bereiche (56) die Lagerflächen (56-2) zueinander sowie zu den Tragsäulen (51) mit einem Rangierabstand (RA1, RA2) festgelegt werden.

14. Lager nach Anspruch 12 oder 13,
wobei das Tragwerk **(60)**
- aufrecht, insbesondere lotrecht, stehende, sich insbesondere über die gesamte Höhe des Lagerregals (50) erstreckende Tragsäulen (51) umfasst, die insbesondere in in Längsrichtung (X) sowie in Querrichtung (Y) des Lagerregals (50) verlaufenden, geraden Reihen in (X1, X2 usw.) und Spalten (Y1, Y2 usw.) angeordnet sind,
- innerhalb derer die Tragsäulen (51) in gleichen Säulen-Abständen (SAX, SAY) zueinander angeordnet sind,
und/oder
- die Säulen-Abstände (SAX oder SAY) in einer, insbesondere nur in einer, der beiden Richtungen (X, Y) auf die Größen der Lagerflächen (56-2) und/oder die größeren der Grundflächen der darauf abzustellenden Anhänger (2) abgestimmt sind,
insbesondere
- die X-Richtung der Säulen der Erstreckungsrichtung (58') der Fahrgassen (58) entspricht und
- der Säulen-Abstand (SAX) in X-Richtung auf die Breite der Lagerflächen (56a) und/oder der darauf abzustellenden Anhänger (2) abgestimmt ist.

15. Lager nach Anspruch 14,
**dadurch gekennzeichnet, dass**
- in Verlaufsrichtung (58') der Fahrgassen (58), insbesondere in X-Richtung, der freie Abstand (fSAX) zwischen benachbarten Tragsäulen (51) in einer Reihe X das ganzzahlige Mehrfache der Summe aus der Breite (BLF), einer Lagerfläche (56-2) und eines Rangierabstandes (RA1, RA2), in dieser Richtung um maximal 30 %, besser maximal 20 %, besser maximal 10 %, besser maximal 5 %, besser maximal 3 %, einer einzigen solchen Summe überschreitet.

16. Lager nach einem der vorhergehenden Vorrichtungs-Ansprüche,
**dadurch gekennzeichnet, dass**
- bei in den Fahrgassen (58) stehenden Tragsäulen (51) die Lagerflächen (56-2) relativ zu den Positionen der Tragsäulen (51) so festgelegt sind, dass eine in einer Fahrgassen (58) stehende Reihe von Tragsäulen (51) zumindest von einem der beiden benachbarten Abstellbereiche (56) in Y-Richtung weiter entfernt ist als die Breite eines Gespanns (4+2) mit einem in den Abstellbereichen (56) beidseits dieser Fahrgasse (58) zum Abstellen vorgesehenen Anhänger (2) beträgt
und/oder
bei in den Abstellbereichen (56) stehenden Tragsäulen (51) die Lagerflächen (56-2) relativ zu den Positionen der Tragsäulen (51) so festgelegt sind, dass
- entweder die Tragsäulen (51) einer, insbesondere in X-Richtung verlaufenden, Reihe von Tragsäulen (51) jeweils in einer, insbesondere in Y-Richtung verlaufenden, Säulen-Furt (SF1) (definieren) zwischen zwei Lager-Halbreihen (59) stehen
- oder die Tragsäulen (51) einer, insbesondere in Y-Richtung verlaufenden, Spalte von Tragsäulen (51) jeweils in einer, insbesondere in X-Richtung verlaufenden, Säulen-Furt (SF2) zwischen jeweils zwei einander entsprechenden Lagerflächen (56-2) innerhalb der Lager-Halbreihen (59) steht.

17. Lager nach einem der vorhergehenden Vorrichtungs-Ansprüche, wobei
- die Grundflächen verschiedener Arten von Anhängern (2) verschiedene Breiten besitzen
**dadurch gekennzeichnet, dass**
- entweder zwischen zwei in X-Richtung beabstandeten Säulen meist die in X-richtung gleiche Abfolge von Lager-Halbreihen mit jeweils unterschiedlicher Breite ihrer Lagerflächen vorhanden ist,
- oder der Säulen Abstand (SAX) in X-Richtung in Relation zu den unterschiedlichen Breiten der Lagerflächen so festgelegt ist, dass ein ganzzahliges x-faches der größeren Breite von einem höheren ganzzahligen y-fachen der geringeren Breite um nicht mehr als 20 %, besser um nicht mehr als 10 %, von dem ganzzahligen y-fachen abweicht.
- insbesondere x +1 = y gilt
und/oder
- mehrere Arten (2a, b, c) von hinsichtlich ihrer Grundflächen unterschiedlich großen Anhängern (2) vorhanden sind sowie
- dementsprechend mehrere Arten unterschiedlich großer Lagerflächen (56-2a, 56-2b, 56-2c) vorhanden sind, die an die Grundflächen der verschiedenen Arten (2a, b, c) von Anhängern (2) angepasst sind,
- insbesondere die verschiedenen Arten von Lagerflächen (56-2a, 56-2b, 56-2c) alle die gleiche Breite besitzen.

18. Lager nach einem der vorhergehenden Vorrichtungs-Ansprüche,
**dadurch gekennzeichnet, dass**
sofern die Regalböden (55) auf der Oberseite Navigations-Markierungen (66) tragen,
- die, insbesondere alle, Regalböden (55) hinsichtlich der vorhandenen Navigations-Markierungen (66) identisch ausgebildet sind,
- ausgenommen höchstens das unterschiedliche Vorhandensein von Eck-Aussparungen (67) in den Ecken der Regalböden (55) zur Aufnahme eines Teils des Querschnittes einer Tragsäule (51)
und/oder
- in den Lager-Halbreihen (59) beidseits einer Lagergasse (58) nur gleich breite Arten von Lagerflächen (56-2a, 56-2b, 56-2c) vorhanden sind.

19. Lager nach einem der vorhergehenden Vorrichtungs-Ansprüche,
**dadurch gekennzeichnet, dass**
- in der Aufsicht betrachtet innerhalb eines Polygons aus benachbarten Tragsäulen (51), insbesondere eines Vierecks aus vier benachbarten Tragsäulen (51), mindestens zwei Regalböden (55.1, 55.2) nebeneinander angeordnet sind,
- die randseitig insbesondere auf einer Zwischentraverse (54) aufliegen, die mit ihren Enden an den Längstraversen (52) oder den Quertraversen (53) befestigt ist,
- wobei insbesondere die zueinander benachbarten Kanten (55a, c) der zwei benachbarten Regalböden (55.1, 55.2) auf der gleichen Zwischentraverse (54) aufliegen,
insbesondere
- die mehreren Regalböden (55) innerhalb eines Polygons, insbesondere eines Vierecks, zumindest hinsichtlich der Navigations-Markierungen (66) identisch sind,
- ausgenommen höchstens das unterschiedliche Vorhandensein von Eck-Aussparungen (67) in den Ecken der Regalböden (55.1, 55.2) zur Aufnahme eines Teils des Querschnittes einer Tragsäule (51).

## Claims

1. **Method** for operating a storage area facility (1) with
- a central control (1*),
- a storage rack (50) with at least one, preferably several, levels (50a, b) spaced vertically apart, supported by a supporting structure (60),
- the driving surfaces (50"a, b) of a level being formed by the upper sides of several shelves (55) adjoining one another in a gapless manner within a level (50a),
- unmanned, autonomously driving tractors (4) with an on-board control (6) and trailers (2) that can be coupled to or uncoupled from the tractors and are driveable or parked on the shelves (55),
wherein
- the on-board control (6) of a tractor (4) is informed of a travel destination for the tractor (4) by the central control (1*),
wherein
the tractor (4) itself determines its route from its current position to the travel destination by means of its on-board control (6) in the form of a target travel route and drives to the destination, in which its on-board control (6)
- either receives several potential target travel routes from the central control (1*) and selects one of them,
- or is informed of freely accessible areas and receives from the central control (1*) helpful information for establishing a target travel route, and the on-board control (6) determines the target travel route by taking this information into account,
- or is only informed of freely accessible areas by the central control (1*) and the on-board control (6) determines the target travel route within the freely accessible areas,
**characterised in that**
- the tractor (4), with and without a coupled trailer (2), repeatedly determines its current actual position on its journey to the destination and compares it with its target travel route, and if there is a deviation compensates for the difference by coming closer to the target travel route by driving to it, and
- the tractor (4), with and without a coupled trailer (2), already frees up to the central control (1*) the freely accessible areas already located behind it along its target travel route for other tractors (4) to use before it has reached its destination.

2. Method according to claim 1, wherein
- the shelves (55) display navigation markings (66) on their upper sides, the position and rotational orientation of which in relation to the respective shelf (55) are known to the on-board control (6) or can be determined by the latter,
- the tractor (4) has a ground camera (5) coupled to its on-board control (6) and aimed towards the ground for scanning and identifying the navigation markings (66),
- the on-board control (6) is informed of the position of this shelf (55) in the storage rack (50) at least the first time the tractor (4) stops on a shelf (55), in particular in the form of the identity or number of this shelf (55),
**characterised in that**
- either the travel destination is notified to the on-board control (6) in the form of the target shelf (55.x) and the target marking there
- or an absolute coordinate system exists at least over the whole floor, in particular over the whole storage rack, and the position of each navigation marker (66) of each shelf (55) is stored in absolute coordinates in the central control (1*) and also in the onboard control (6), and the onboard control (6) is provided with the travel destination in the form of absolute coordinates, in particular the absolute coordinates of the destination marker.

3. Method according to one of the preceding claims,
**characterised in that**
- the on-board control (6) determines the crossing of a gap from one shelf (55.1) to an adjacent shelf (55.2) and thus to the new current shelf (55.2), taking into account the previous shelf (55.1), the direction of travel of the tractor (4) immediately before crossing the gap,
- taking into account knowledge of the position of the markings (M) on both shelves (55.1, 55.2),
in particular
- to determine the new, current shelf (55.2) as an additional plausibility check,
- the number of wheel rotations and thus the distance travelled between the last determined position on the old shelf (55.1) and the new shelf (55.2) is taken into account,
- the elapsed travel time between the last determined position on the old shelf (55.1) and the new shelf (55.2) is taken into account.

4. Method according to one of the preceding claims,
**characterised in that**
- at least the majority of the navigation markings (66) are arranged identically on the shelf, in particular on all shelves (55),
- in particular the navigation markings (66) are arranged in the form of a matrix, in particular in marking rows (MR1, MR2, etc.) and marking columns (MS1, MS2, etc.), in particular parallel to the edges of a shelf (55) that is rectangular in plan view,
and/or
- in particular the position of a navigation marking (66) is stored in the form of the position of a, in particular single, marking reference point (MBP) of this marking (66) in absolute coordinates,
wherein in particular
- separation bars (T1, T2) run between, and in particular spaced from, the rows (MR1, MR2) of navigation markings (66),
- the longitudinal edges of which are preferably used by the on-board control (6) to calculate a single dividing line (T'1, T'2) representing the direction of the separation bar (T1, T2), said line lying in particular in the middle between both longitudinal edges,
- in particular the direction of the separation bars or dividing lines is used to determine the orientation, i.e. the position, of the tractor (4) relative to one of the markings (66) of the on-board control (6).

5. Method according to one of the preceding claims,
**characterised in that**
the onboard control (6) is an electronic control and comprises several control levels, namely
- a planning level that determines the target travel route and, in particular, updates and/or optimises this repeatedly, preferably continuously,
- a driving level that enables the tractor to drive as far as possible along the target travel route, compares the current actual position of the tractor (4) with its current target position and if necessary adjusts it, and communicates the current actual position to the planning level,
- an orientation level that reads the markings (66) by means of, in particular, a ground camera and determines the actual position of the tractor (4) and communicates it to the driving level
and/or
- the onboard control (6) is able to guide a (4+ 2) tractor-trailer combination to a destination defined by its position and rotational orientation, regardless of whether the combination is towing or pushing.

6. Method according to one of the preceding claims,
wherein the supporting structure (60)
- comprises upright, in particular vertical, supporting columns (51) extending in particular over the entire height of the storage rack (50), which are arranged in particular in straight rows (X1, X2, etc.) and columns (Y1, Y2, etc.) extending in the longitudinal direction (X) and also in the transverse direction (Y) of the storage rack (50),
- within which the supporting columns (51) are arranged at equal column spacings (SAX, SAY) from one another,
**characterised in that**
- the column spacings (SAX or SAY) are coordinated in one, in particular only in one, of the two directions (X, Y) with the base areas of the trailers (2) and/or the storage areas (56-2) intended for this and/or the base areas of the (4 + 2) combinations,
in particular
- the X direction of the rows of supporting columns (51) is determined corresponding to the extension direction (58') of the driving aisles (58), and
- the column spacing (SAX) in the X direction is coordinated with the width of the intended storage areas (56a) and/or of the trailers (2) to be parked thereon,
in particular
- in the extension direction (58') of the driving aisles (58), in particular in the X direction, the free spacing (fSAX) between adjacent supporting columns (51) in a row X is determined such that it exceeds a whole number of the sum of the width (BLF), a storage area (56-2), and a manoeuvring distance (RA1, RA2), in this direction by at most 30%, better by at most 20%, better by at most 10%, better by at most 5%, better by at most 3% of a single such sum.

7. Method according to one of the preceding claims,
**characterised in that**
in the case of supporting columns (51) located in the parking areas (56), the storage areas (56-2) are determined relative to the positions of the supporting columns (51) such that
- either the supporting columns (51) of a row of supporting columns (51) extending in particular in the X direction, in each case in a column crossing (SF1) (define) extending in particular in the Y direction between two supporting half-rows (59)
and/or
- in the case of supporting columns (51) located in the driving aisles (58), the positions of the storage surfaces (56-2) relative to the positions of the supporting columns (51) are automatically determined such that a row of supporting columns (51) located in a driving aisle (58) is further away at least from one of the two adjacent parking areas (56) in the Y direction than the width of a (4 + 2) combination intended for parking in the parking areas (56) on both sides of this driving aisle (58).

8. Method according to one of the preceding claims,
**characterised in that**
- either the width (BFG) of a driving aisle (58) is automatically determined to be at most 20 cm, better only 10 cm, better only 5 cm greater than the width of the driving aisle required for turning a (4+2) combination according to one of the preceding claims in the driving aisle (58), in particular is determined as the largest diagonal (DG) (define) of a (4+2) combination viewed in plan view,
- or the width (BFG) of a driving aisle (58) is automatically determined to be smaller than the width of the driving aisle required for turning a combination in the driving aisle (58), in particular is determined as the largest diagonal (DG) of a combination viewed in plan view, in particular is less than the length (LG) of a (4+2) combination,
- however is automatically defined greater than the width of the driving aisle (58) required so that the tractor (4) of the combination can shunt the trailer (2) into a free storage position between two trailers (2) parked in the adjacent parking area.

9. Method according to one of the preceding claims, wherein
- several types (2a, b, c) of trailers (2) of different sizes with regard to their base areas are present in the storage rack (50),
- in particular the base areas of the different types of trailers (2) all have the same width,
**characterised in that**
- storage areas (56-2a, 56-2b, 56-2c) of different sizes, which are coordinated with the base areas of the different types (2a, b, c) of trailers (2), and their arrangement in the storage rack (50) are automatically determined
- depending on the predetermined ratio of the number of the different types (2a, b, c) of trailers (2) in the storage rack (50).
(several widths of trailers)

10. Method according to one of the preceding claims, wherein
- several types (2a, b, c) of trailers (2) of different sizes with regard to their base areas are present in the storage rack (50),
- the base areas of the different types of trailers (2) have different widths,
**characterised in that**
- either between two columns spaced apart in the X direction, mostly the same sequence of half-rows in the X direction each with a different width of their storage areas are defined,
- or the column spacing (SAX) in the X direction is determined in relation to the different widths of the storage areas such that a whole number X-times the larger width deviates from a larger whole number Y-times the smaller width by no more than 20%, in particular by no more than 10%,
- in particular x +1 =y is true
and/or
- in the mutually aligned storage half-rows (59), in particular in the storage areas (56), on both sides of a storage aisle (58) only storage areas (56-2a, 56-2b, 56-2c) with the same width, in particular only one type of storage area (56-2a, 56-2b, 56-2c), is automatically determined.

11. Method according to one of the preceding claims, wherein:
- from an approach of the tractor (4) up to a detection distance the tractor (4) identifies the trailer (2) by means of a contactless, in particular optical, sensor based on an identification marking and also determines its distance and position from the tractor (4),
- the columns or rows of navigation markings (66) extending transversely to the gap (63) between two adjacent shelves (55.1, 55.2) can be offset (V) from one another at the gap (63),
- the actual position of each shelf (55) within the storage rack (50) is known to the central control (1*)
- and thus also the size of the offset (V) in the direction of the gap (63), both in absolute terms with regard to the absolute coordinate system and relative to at least one of the adjacent shelves (55), is known
**characterised in that**:
- the on-board control (6) as a rule assumes that each shelf (55) is located exactly at its intended target position within the storage rack (50),
- except however in cases in which the tractor (4) is located with its ground camera above a first shelf (55.1) and from there has to target, for the purposes of coupling, a trailer (2) which is located on an adjacent second shelf (55.2), starting from the absolute actual coordinates of the markings on the second shelf (55.2),
in particular
- for this purpose the onboard control (6) receives from the central control the relative offset (V) between the first shelf (55.1) and the second shelf (55.2), and
- after crossing over the gap (63) subtracts this relative offset (V) from the absolute coordinates stored for the markings (66) on the second shelf (55.2), i.e. the absolute target coordinates.

12. Storage area facility (1), comprising
- a storage rack (50) with at least one level (50a, b) supported by a supporting structure (60),
- the driving surfaces (50a, b) of a level being formed by the upper sides of several adjacent shelves (55) within a level (50a, b),
- unmanned, autonomously driven tractors (4) and trailers (2) that can be automatically coupled and uncoupled, which can be driven on the shelves (55) or are each parked on a virtually defined storage area (56-2),
- a central control (1*) that is in wireless contact with all tractors (4) and all controllably movable parts of the storage facility (1),
wherein
the driving surfaces (50"a, b) of a level are virtually divided into
- parking areas (56) with a plurality of storage areas (56-2) for parking trailers (2),
- traffic areas for driving tractors (4) or (4 + 2) combinations along, wherein
- the traffic areas comprise driving aisles (58), which in particular run straight and/or parallel to one another,
- the traffic areas comprise connecting areas (57), which in particular connect the outlets of the driving aisles (58) and serve for access to the driving aisles (58),
- the parking areas (56) extend in each case laterally from the driving aisles (58), in particular on both sides, whose depth perpendicular to the extension direction (58') of the driving aisles (58) is in particular a multiple of the length of a trailer (2).
**characterised in that**
- the tractors (4) are designed such that the tractor (4) with and without attached trailers (2) repeatedly determines its current actual position during its journey to the destination and compares it with its target travel route, and If there is a deviation it compensates for the difference by driving to the target travel route, and
- the tractor (4) with and without attached trailers (2) frees up the regions of freely accessible areas already behind it along its target travel route to the central control (1*) for other tractors (4) to drive on before it has reached its destination.

13. Storage facility according to claim 12,
**characterised in that**
- a storage area (56-2) is larger in both horizontal directions than the base area (2") of the trailer (2) to be parked thereon, in particular is larger in the width of the trailer by at most 30 mm, better by at most 20 mm, better by at most 15 mm
and/or
- the storage half-rows (59) provided on both sides of the driving aisle (58) are aligned with one another in the transverse direction to the extension direction (58') of the driving aisle (58)
and/or
- the storage half-rows (59) adjacent to or assigned to all driving aisles (58) are aligned with each other in the transverse direction to the extension direction (58') of the driving aisles (58)
and/or
- within the parking areas (56) the storage areas (56-2) are specified with respect to one another and to the supporting columns (51) with a manoeuvring distance (RA1, RA2).

14. Storage according to claim 12 or 13,
wherein the supporting structure (60)
- comprises upright, in particular vertical, supporting columns (51), which extend in particular over the entire height of the storage rack (50), which are arranged in particular in straight rows (X1, X2, etc.) and columns (Y1, Y2, etc.) running in the longitudinal direction (X) and also in the transverse direction (Y) of the storage rack (50),
- within which the supporting columns (51) are arranged at equal column spacings (SAX, SAY) from one another,
and/or
- the column spacings (SAX or SAY) in one, in particular only one, of the two directions (X, Y) are coordinated with the sizes of the storage areas (56-2) and/or the larger of the base areas of the trailers (2) to be parked thereon,
in particular
- the X direction of the columns corresponds to the extension direction (58) of the driving aisles (58), and
- the column spacing (SAX) in the X direction is coordinated with the width of the storage areas (56a) and/or of the trailers (2) to be parked thereon.

15. Storage according to claim 14,
**characterised in that**
- in the running direction (58') of the driving aisles (58), in particular in the X direction, the free spacing (fSAX) between adjacent supporting columns (51) in a row X exceeds a whole number multiple of the sum of the width (BLF), a storage area (56-2), and a manoeuvring distance (RA1, RA2), in this direction by at most 30%, better at most 20%, better at most 10%, better at most 5%, better at most 3%, of a single such sum.

16. Storage according to one of the preceding device claims,
**characterised in that**
- in the case of supporting columns (51) located in the driving aisles (58), the storage surfaces (56-2) are determined relative to the positions of the supporting columns (51) such that a row of supporting columns (51) located in a driving aisle (58) is further away at least from one of the two adjacent parking areas (56) in the Y direction than the width of a (4+2) combination with a trailer (2) intended to be parked in the parking areas (56) on both sides of this driving aisle (58)
and/or
in the case of supporting columns (51) located in the parking areas (56), the storage areas (56-2) are determined relative to the positions of the supporting columns (51) such that
- either the supporting columns (51) of a row of supporting columns (51) extending in particular in the X direction, are each in a column ford (SF1) (define) extending in particular in the Y direction between two storage half-rows (59)
- or the supporting columns (51) of a column of supporting columns (51) extending in particular in the Y direction, are each located in a column ford (SF2) extending in particular in the X direction between in each caser two storage areas corresponding to one another (56-2) within the storage half-rows (59).

17. Storage according to one of the preceding device claims, wherein
- the base areas of different types of trailers (2) have different widths,
**characterised in that**
- either between two columns spaced apart in the X direction, there is generally the same sequence of storage half-rows in the X direction, each with a different width of their storage areas,
- or the column spacing (SAX) in the X direction is determined in relation to the different widths of the storage areas such that a whole number X-times the larger width deviates from a higher whole number Y-times the smaller width by no more than 20%, better by no more than 10%, from the whole number Y-times.
- in particular x + 1 = y
and/or
- several types (2a, b, c) of trailers (2) of different sizes in terms of their base areas are present, and
- accordingly several types of storage areas (56-2a, 56-2b, 56-2c) of different sizes are present, which are coordinated with the base areas of the different types (2a, b, c) of trailers (2),
- in particular the different types of storage areas (56-2a, 56-2b, 56-2c) all have the same width.

18. Storage according to one of the preceding device claims,
**characterised in that**
if the shelves (55) display navigation markings (66) on their upper sides,
- the shelves (55), in particular all shelves, are identically designed with regard to the existing navigation markings (66),
- except, at most, the different presence of corner recesses (67) in the corners of the shelves (55) for accommodating a part of the cross-section of a supporting column (51)
and/or
- only equally wide types of storage surfaces (56-2a, 56-2b, 56-2c) are present in the storage half-rows (59) on both sides of a storage aisle (58).

19. Storage according to one of the preceding device claims,
**characterised in that**
- viewed in plan view, at least two shelves (55.1, 55.2) are arranged next to one another within a polygon of adjacent supporting columns (51), in particular a quadrilateral composed of four adjacent supporting columns (51),
- which rest at their edges in particular on an intermediate cross member (54), which is secured by its ends to the longitudinal cross members (52) or to the transverse cross members (53),
- wherein in particular the adjacent edges (55a, c) of the two adjacent shelves (55.1, 55.2) rest on the same intermediate cross member (54),
in particular
- the multiple shelves (55) within a polygon, in particular within a quadrilateral, are identical at least with regard to the navigation markings (66),
- except for, at most, the different presence of corner recesses (67) in the corners of the shelves (55.1, 55.2) for accommodating a part of the cross-section of a supporting column (51).

## Revendications

1. Procédé d'exploitation d'un entrepôt de surface (1),
comprenant
- une commande centrale (1*),
- un rayonnage de stockage (50) avec au moins un, de préférence plusieurs étages (50a, b) espacés en hauteur les uns des autres et portés par une structure porteuse (60),
- dont les surfaces de circulation d'étage (50"a, b) sont formées par les faces supérieures de plusieurs étagères (55) se raccordant les unes aux autres sans espacement à l'intérieur d'un étage (50a),
- des tracteurs (4) sans personnel, se déplaçant de manière autonome, comprenant une commande embarquée (6) et des remorques (2) qui peuvent être attelées/dételées de ceux-ci et qui peuvent être déplacées ou sont garées sur les étagères (55),
dans lequel
- la commande embarquée (6) d'un tracteur (4) est informée par la commande centrale (1*) d'une destination de déplacement pour le tracteur (4),
sachant que le tracteur (4) fixe lui-même son trajet depuis sa position actuelle jusqu'à la destination au moyen de sa commande embarquée (6) sous la forme d'un itinéraire de consigne et se rend à la destination du fait que sa commande embarquée (6)
- soit est informée par la commande centrale (1*) sur plusieurs itinéraires de consigne potentiels et en choisit un,
- soit est informée par la commande centrale (1*) sur des surfaces librement praticables et sur des indications utiles pour établir un itinéraire de consigne, et la commande embarquée (6) fixe l'itinéraire de consigne en tenant compte de ces indications,
- soit n'est informée par la commande centrale (1*) que sur des surfaces librement praticables, et la commande embarquée (6) fixe l'itinéraire de consigne à l'intérieur des surfaces librement praticables,
**caractérisé en ce que**
- le tracteur (4), avec ou sans remorque (2) attelée, détermine plusieurs fois sa position réelle actuelle pendant son trajet vers la destination et la compare à son itinéraire de consigne et, en cas d'écart, compense la différence en se rapprochant davantage de l'itinéraire de consigne, en particulier en se dirigeant vers celui-ci, et
- le tracteur (4), avec ou sans remorque (2) attelée, libère déjà pour la commande centrale (1*) les zones des surfaces librement praticables, qui se trouvent déjà derrière lui le long de son itinéraire de consigne, pour que d'autres tracteurs (4) puissent y circuler, avant qu'il n'ait atteint sa destination.

2. Procédé selon la revendication 1, dans lequel
- les étagères (55) portent sur leur face supérieure des repères de navigation (66) dont la position et l'orientation par rapport à l'étagère (55) concernée sont connues de la commande embarquée (6) ou peuvent être détectées par celle-ci,
- le tracteur (4) présente une caméra de sol (5) couplée à sa commande embarquée (6) et dirigée vers le sol pour balayer et identifier les repères de navigation (66),
- au moins lors du 1^{er} positionnement du tracteur (4) sur une étagère (55), la commande embarquée (6) est informée sur la position de cette étagère (55) dans le rayonnage de stockage (50), en particulier sous la forme de l'identité ou du numéro de cette étagère (55),
**caractérisé en ce que**
- soit la destination est indiquée à la commande embarquée (6) sous la forme de l'étagère cible (55.x) et du repère cible à cet endroit,
- soit un système de coordonnées absolues existe au moins sur tout l'étage, en particulier sur tout le rayonnage de stockage, et la position de chaque repère de navigation (66) de chaque étagère (55) est enregistrée en coordonnées absolues à la fois dans la commande centrale (1*) et dans la commande embarquée (6), et la destination est indiquée à la commande embarquée (6) sous la forme des coordonnées absolues, en particulier des coordonnées absolues du repère cible.

3. Procédé selon l'une des revendications précédentes,
**caractérisé en ce que**
- la commande embarquée (6) détecte le franchissement d'un joint d'une étagère (55.1) à une étagère voisine (55.2) et ainsi la nouvelle étagère actuelle (55.2) en tenant compte de
l'étagère précédente (55.1),
du sens de déplacement du tracteur (4) immédiatement avant le franchissement du joint, et
- la connaissance de la position des repères (M) présents sur les deux étagères (55.1, 55.2),
sachant que, en particulier
- la détection de la nouvelle étagère actuelle (55.2) tient compte, en tant que contrôle de plausibilité supplémentaire,
- du nombre de tours de roue et donc du trajet de déplacement parcouru entre la dernière position détectée sur l'ancienne étagère (55.1) et la nouvelle étagère (55.2), et
- du temps de déplacement écoulé entre la dernière position détectée sur l'ancienne étagère (55.1) et la nouvelle étagère (55.2).

4. Procédé selon l'une des revendications précédentes,
**caractérisé en ce que**
- au moins la majorité des repères de navigation (66) sont disposés de manière identique sur les étagères (55), en particulier sur toutes les étagères,
- en particulier, les repères de navigation (66) sont disposés de manière matricielle, en particulier en rangées de repères (MR1, MR2, etc.) et en colonnes de repères (MS1, MS2, etc.), en particulier parallèlement aux bords d'une étagère (55) rectangulaire en vue de dessus,
et/ou
- en particulier, la position d'un repère de navigation (66) est enregistrée sous la forme de la position d'un point de référence de repère (MBP), en particulier unique, de ce repère (66), en coordonnées absolues,
sachant qu'en particulier
- des barres de séparation (T1, T2) s'étendent entre les rangées (MR1, MR2) de repères de navigation (66), en particulier à distance de celles-ci,
- dont les bords longitudinaux sont de préférence utilisés par la commande embarquée (6) pour calculer une seule ligne de séparation (T'1, T'2) représentant la direction de la barre de séparation (T1, T2), ligne qui est située en particulier à mi-chemin entre ses deux bords longitudinaux,
- en particulier, la direction des barres de séparation ou des lignes de séparation est utilisée par la commande embarquée (6) pour déterminer l'orientation, c'est-à-dire la position, du tracteur (4) par rapport à l'un des repères (66).

5. Procédé selon l'une des revendications précédentes,
**caractérisé en ce que** la commande embarquée (6) est une commande électronique et comprend plusieurs niveaux de commande, à savoir
- un niveau de planification qui fixe l'itinéraire de consigne et qui l'actualise et/ou l'optimise notamment à plusieurs reprises, de préférence en permanence,
- un niveau de déplacement qui exécute le déplacement du tracteur si possible le long de l'itinéraire de consigne, compare la position réelle actuelle du tracteur (4) avec sa position de consigne actuelle et la compense le cas échéant, et qui signale la position réelle actuelle au niveau de planification,
- un niveau d'orientation qui lit les repères (66) en particulier au moyen d'une caméra de sol et détecte la position réelle du tracteur (4) et la signale au niveau de déplacement,
et/ou
- la commande embarquée (6) est en mesure de guider, en termes de position et d'orientation, un attelage (4 + 2) vers une destination, indépendamment de savoir si l'attelage se déplace alors en mode de traction ou en mode de poussée.

6. Procédé selon l'une des revendications précédentes,
dans lequel la structure porteuse (60)
- comprend des montants porteurs (51) verticaux, en particulier d'aplomb, qui s'étendent en particulier sur toute la hauteur du rayonnage de stockage (50) et qui sont disposés en rangées (X1, X2, etc.) et en colonnes (Y1, Y2, etc.) rectilignes qui s'étendent en particulier dans la direction longitudinale (X) ainsi que dans la direction transversale (Y) du rayonnage de stockage (50),
- à l'intérieur desquelles les montants porteurs (51) sont disposés à des distances inter-montant (SAX, SAY) égales entre eux,
**caractérisé en ce que**
- les distances inter-montant (SAX ou SAY) dans l'une, en particulier dans une seule, des deux directions (X, Y) sont adaptées aux surfaces de base des remorques (2) et/ou aux surfaces de rangement (56-2) prévues pour celles-ci et/ou aux surfaces de base des attelages (4 + 2),
en particulier
- la direction X des rangées des montants porteurs (51) est fixée en fonction de la direction d'extension (58') des allées de circulation (58), et
- la distance inter-montant (SAX) dans la direction X est adaptée à la largeur des surfaces de rangement (56a) prévues et/ou des remorques (2) à y garer,
en particulier
- dans la direction d'extension (58') des allées de circulation (58), en particulier dans la direction X, la distance libre (fSAX) entre des montants porteurs (51) voisines dans une rangée X est fixée de telle sorte qu'elle dépasse le multiple entier de la somme de la largeur (BLF) d'une surface de rangement (56-2) et d'une distance de manœuvre (RA1, RA2) dans cette direction de 30 % au maximum, mieux de 20 % au maximum, mieux de 10 % au maximum, mieux de 5 % au maximum, mieux de 3 % au maximum d'une seule telle somme.

7. Procédé selon l'une des revendications précédentes,
**caractérisé en ce que**, lorsque les montants porteurs (51) se trouvent dans les zones de stationnement (56), les surfaces de rangement (56-2) sont fixées par rapport aux positions des montants porteurs (51) de telle sorte que
- soit les montants porteurs (51) d'une rangée de montants porteurs (51), s'étendant en particulier dans la direction X, se trouvent chacun dans un gué de colonnes (SF1) (à définir), s'étendant en particulier dans la direction Y, entre deux demi-rangées de stockage (59),
et/ou
- dans le cas de montants porteurs (51) situés dans les allées de circulation (58), les positions des surfaces de rangement (56-2) par rapport aux positions des montants porteurs (51) sont fixées automatiquement de telle sorte qu'une rangée de montants porteurs (51) située dans une allée de circulation (58) est plus éloignée d'au moins l'une des deux zones de stationnement (56) voisines dans la direction Y que ne l'est la largeur d'un attelage (4+2) avec une remorque (2) prévue pour le stationnement dans les zones de stationnement (56) de part et d'autre de cette allée de circulation (58).

8. Procédé selon l'une des revendications précédentes,
**caractérisé en ce que**
- soit la largeur (BFG) d'une allée de circulation (58) est fixée automatiquement à une valeur supérieure de 20 cm au maximum, de préférence de 10 cm seulement, de préférence de 5 cm seulement, à la largeur de l'allée de circulation nécessaire pour faire tourner un attelage (4+2) selon l'une des revendications précédentes dans l'allée de circulation (58), en particulier à la plus grande diagonale (DG) (à définir) d'un attelage (4+2) observée en vue de dessus,
- soit la largeur (BFG) d'une allée de circulation (58) est fixée automatiquement à une valeur inférieure à la largeur de l'allée de circulation nécessaire pour faire tourner un attelage dans l'allée de circulation (58), en particulier à la plus grande diagonale (DG) d'un attelage observée en vue de dessus, en particulier inférieure à la longueur (LG) d'un attelage (4+2),
- mais elle est fixée automatiquement à une valeur supérieure à la largeur de l'allée de circulation (58) nécessaire pour que le tracteur (4) de l'attelage puisse manœuvrer la remorque (2) jusqu'à une position de rangement libre entre deux remorques (2) stationnées sur la zone de stationnement adjacente.

9. Procédé selon l'une des revendications précédentes, dans lequel
- plusieurs types (2a, b, c) de remorques (2) de tailles différentes en termes de surfaces de base sont présents dans le rayonnage de stockage (50),
- en particulier, les surfaces de base des différents types de remorques (2) ont toutes la même largeur,
**caractérisé en ce que**
- des surfaces de rangement (56-2a, 56-2b, 56-2c) de différentes tailles, adaptées aux surfaces de base des différents types (2a, b, c) de remorques (2), et leur disposition dans le rayonnage de stockage (50) sont fixées automatiquement,
- en fonction du rapport prédéterminé du nombre des différents types (2a, b, c) de remorques (2) dans le rayonnage de stockage (50).

10. Procédé selon l'une des revendications précédentes, dans lequel
- plusieurs types (2a, b, c) de remorques (2) de tailles différentes en termes de surfaces de base sont présents dans le rayonnage de stockage (50),
- les surfaces de base des différents types de remorques (2) ont des largeurs différentes,
**caractérisé en ce que**
- soit, entre deux montants espacés dans la direction X, il y a le plus souvent la même succession de demi-rangées dans la direction X, chacune ayant une largeur différente quant à ses surfaces de rangement,
- soit la distance inter-montant (SAX) dans la direction X est fixée par rapport aux différentes largeurs des surfaces de rangement de telle sorte qu'un multiple entier x de la plus grande largeur ne s'écarte pas de plus de 20 %, en particulier pas de plus de 10 %, d'un multiple entier y plus élevé de la plus petite largeur,
- sachant en particulier que x +1 = y,
et/ou
- dans les demi-rangées de stockage (59) alignées les unes par rapport aux autres, en particulier dans les zones de stationnement (56), de part et d'autre d'une allée de stockage (58), seules des surfaces de rangement (56-2a, 56-2b, 56-2c) de même largeur, en particulier d'un seul type de surfaces de rangement (56-2a, 56-2b, 56-2c), sont fixées automatiquement.

11. Procédé selon l'une des revendications précédentes, dans lequel
- à partir d'une approche du tracteur (4) jusqu'à une distance de repérage, le tracteur (4) identifie la remorque (2) au moyen d'un capteur, notamment optique, fonctionnant sans contact, à l'aide d'un repère d'identification et détecte également sa distance et sa position par rapport au tracteur (4),
- les colonnes ou rangées de repères de navigation (66) s'étendant transversalement au joint (63) entre deux étagères voisines (55.1, 55.2) peuvent présenter un décalage (V) les unes par rapport aux autres au niveau du joint (63),
- la position réelle de chaque étagère (55) à l'intérieur du rayonnage de stockage (50) est connue de la commande centrale (1*),
- et donc également la taille du décalage (V) dans la direction du joint (63), aussi bien en valeur absolue par rapport au système de coordonnées absolues que par rapport à au moins l'une des étagères (55) voisines,
**caractérisé en ce que**
- la commande embarquée (6) part généralement du principe que chaque étagère (55) se trouve exactement dans sa position de consigne prévue à l'intérieur du rayonnage de stockage (50),
- cependant à l'exception des cas où le tracteur (4) se trouve avec sa caméra de sol au-dessus d'une première étagère (55.1) et doit viser à partir de là une remorque (2) pour l'attelage, laquelle se trouve sur une deuxième étagère (55.2) voisine, ladite commande embarquée part des coordonnées réelles absolues des repères sur la deuxième étagère (55.2),
sachant qu'en particulier
- la commande embarquée (6) est informée à cet effet par la commande centrale sur le décalage relatif (V) entre la première étagère (55.1) et la deuxième étagère (55.2), et
- après le franchissement du joint (63), elle déduit ce décalage relatif (V) des coordonnées absolues, que sont les coordonnées de consigne absolues, enregistrées par rapport aux repères (66) sur la deuxième étagère (55.2).

12. Entrepôt de surface (1), comprenant
- un rayonnage de stockage (50) avec au moins un étage (50a, b) porté par une structure porteuse (60),
- dont la surface de circulation d'étage (50"a, b) est formée par les faces supérieures de plusieurs étagères (55) se raccordant les unes aux autres à l'intérieur d'un étage (50a, b),
- des tracteurs (4) sans personnel, se déplaçant de manière autonome, et des remorques (2) pouvant être attelées/dételées automatiquement de ceux-ci, qui peuvent être déplacées sur les étagères (55) ou sont garées chacune sur une surface de rangement (56-2) fixée virtuellement,
- une commande centrale (1*) qui est en contact sans fil avec tous les tracteurs (4) et toutes les parties mobiles commandées de l'entrepôt (1),
dans lequel
les surfaces de circulation d'étage (50"a, b) sont virtuellement subdivisées en
- des zones de stationnement (56) comprenant une pluralité de surfaces de rangement (56-2) pour le stationnement de remorques (2),
- des surfaces de circulation pour être desservies par des tracteurs (4) ou des attelages (4 + 2), sachant que
- les surfaces de circulation comprenant des allées de circulation (58) qui sont en particulier rectilignes et/ou en particulier parallèles entre elles,
- les surfaces de circulation comprennent des surfaces de liaison (57) qui relient notamment les embouchures des allées de circulation (58) et servent à l'approche des allées de circulation (58),
- les zones de stationnement (56) s'étendent chacune latéralement, en particulier de part et d'autre à partir des allées de circulation (58), et leur profondeur perpendiculairement à la direction d'extension (58') des allées de circulation (58) est en particulier égale à un multiple de la longueur d'une remorque (2),
**caractérisé en ce que**
- les tracteurs (4) sont conçus de telle sorte que le tracteur (4), avec et sans remorque (2) attelée, détermine plusieurs fois sa position réelle actuelle pendant son trajet vers la destination et la compare à son itinéraire de consigne et, en cas d'écart, compense la différence en se dirigeant vers l'itinéraire de consigne, et
- le tracteur (4), avec ou sans remorque (2) attelée, libère déjà pour la commande centrale (1*) les zones des surfaces librement praticables, qui se trouvent déjà derrière lui le long de son itinéraire de consigne, pour que d'autres tracteurs (4) puissent y circuler, avant qu'il n'ait atteint sa destination.

13. Entrepôt selon la revendication 12,
**caractérisé en ce que**
- une surface de rangement (56-2) dans les deux directions horizontales est plus grande que la surface de base (2") de la remorque (2) à y garer, en particulier est plus grande quant à la largeur de la remorque, de 30 mm au maximum, mieux de 20 mm au maximum, mieux de 15 mm au maximum,
et/ou
- les demi-rangées de stockage (59) prévues de part et d'autre de l'allée de circulation (58) sont alignées entre elles dans la direction transversale par rapport à la direction d'extension (58') de l'allée de circulation (58), et/ou
- les demi-rangées de stockage (59) associées à des allées de circulation (58) voisines ou à toutes les allées de circulation sont alignées entre elles dans la direction transversale par rapport à la direction d'extension (58') des allées de circulation (58),
et/ou
- à l'intérieur des zones de stationnement (56), les surfaces de rangement (56-2) sont fixées à une distance de manœuvre (RA1, RA2) les unes par rapport aux autres ainsi que par rapport aux montants porteurs (51).

14. Entrepôt selon la revendication 12 ou 13,
dans lequel la structure porteuse (60) comprend
- comprend des montants porteurs (51) verticaux, en particulier d'aplomb, qui s'étendent en particulier sur toute la hauteur du rayonnage de stockage (50) et qui sont disposés en rangées (X1, X2, etc.) et en colonnes (Y1, Y2, etc.) rectilignes qui s'étendent en particulier dans la direction longitudinale (X) ainsi que dans la direction transversale (Y) du rayonnage de stockage (50),
- à l'intérieur desquelles les montants porteurs (51) sont disposés à des distances inter-montant (SAX, SAY) égales entre eux,
et/ou
- les distances inter-montant (SAX ou SAY) dans l'une, en particulier dans une seule, des deux directions (X, Y) sont adaptées aux dimensions des surfaces de rangement (56-2) et/ou aux plus grandes des surfaces de base des remorques (2) à y garer,
en particulier
- la direction X des montants porteurs correspond à la direction d'extension (58') des allées de circulation (58), et
- la distance inter-montant (SAX) dans la direction X est adaptée à la largeur des surfaces de rangement (56a) et/ou des remorques (2) à y garer.

15. Entrepôt selon la revendication 14,
**caractérisé en ce que**
- dans la direction d'extension (58') des allées de circulation (58), en particulier dans la direction X, la distance libre (fSAX) entre des montants porteurs (51) voisins dans une rangée X dépasse le multiple entier de la somme de la largeur (BLF) d'une surface de rangement (56-2) et d'une distance de manœuvre (RA1, RA2) dans cette direction de 30 % au maximum, mieux de 20 % au maximum, mieux de 10 % au maximum, mieux de 5 % au maximum, mieux de 3 % au maximum, d'une seule telle somme.

16. Entrepôt selon l'une des revendications de dispositif précédentes,
**caractérisé en ce que**
- pour les montants porteurs (51) se trouvant dans les allées de circulation (58), les surfaces de rangement (56-2) sont fixées par rapport aux positions des montants porteurs (51) de telle sorte qu'une rangée de montants porteurs (51) se trouvant dans une allée de circulation (58) est plus éloignée au moins de l'une des deux zones de stationnement (56) voisines dans la direction Y que ne l'est la largeur d'un attelage (4+2) avec une remorque (2) prévue pour le stationnement dans les zones de stationnement (56) de part et d'autre de cette allée de circulation (58),
et/ou
pour les montants porteurs (51) se trouvant dans les zones de stationnement (56), les surfaces de rangement (56-2) sont fixées par rapport aux positions des montants porteurs (51) de telle sorte que
- soit les montants porteurs (51) d'une rangée de montants porteurs (51), s'étendant en particulier dans la direction X, se trouvent chacune dans un gué de colonnes (SF1) (à définir), s'étendant en particulier dans la direction Y, entre deux demi-rangées de stockage (59),
- soit les montants porteurs (51) d'une colonne de montants porteurs (51), s'étendant en particulier dans la direction Y, se trouvent chacune dans un gué de colonne (SF2), s'étendant en particulier dans la direction X, entre respectivement deux surfaces de rangement (56-2) se correspondant à l'intérieur des demi-rangées de stockage (59).

17. Entrepôt selon l'une des revendications de dispositif précédentes,
dans lequel
- les surfaces de base de différents types de remorques (2) ont des largeurs différentes,
**caractérisé en ce que**
- soit, entre deux montants espacés dans la direction X, il y a le plus souvent la même succession de demi-rangées de stockage dans la direction X, chacune ayant une largeur différente quant à ses surfaces de rangement,
- soit la distance inter-montant (SAX) dans la direction X est fixée par rapport aux différentes largeurs des surfaces de rangement de telle sorte qu'un multiple entier x de la plus grande largeur ne s'écarte pas de plus de 20 %, en particulier pas de plus de 10 %, d'un multiple entier y plus élevé de la plus petite largeur,
- sachant en particulier que x +1 = y,
et/ou
- il existe plusieurs types (2a, b, c) de remorques (2) de tailles différentes en ce qui concerne leurs surfaces de base, ainsi que
- en conséquence, il existe plusieurs types de surfaces de rangement (56-2a, 56-2b, 56-2c) de tailles différentes, qui sont adaptées aux surfaces de base des différents types (2a, b, c) de remorques (2),
- en particulier, les différents types de surfaces de rangement (56-2a, 56-2b, 56-2c) ont tous la même largeur.

18. Entrepôt selon l'une des revendications précédentes,
**caractérisé en ce que**
dans la mesure où les étagères (55) portent des repères de navigation (66) sur leur face supérieure,
- les étagères (55), en particulier toutes, sont conçues de manière identique en ce qui concerne les repères de navigation (66) existants,
- à l'exception tout au plus de la différence consistant en la présence d'évidements d'angle (67) dans les angles des étagères (55) pour recevoir une partie de la section transversale d'un montant porteur (51),
et/ou
- dans les demi-rangées de stockage (59), de part et d'autre d'une allée de stockage (58), il n'existe que des types de surfaces de rangement (56-2a, 56-2b, 56-2c) de même largeur.

19. Entrepôt selon l'une des revendications de dispositif précédentes,
**caractérisé en ce que**
- vu de dessus, à l'intérieur d'un polygone de montants porteurs (51) voisins, en particulier à l'intérieur d'un quadrilatère de quatre montants porteurs (51) voisins, au moins deux étagères (55.1, 55.2) sont disposées côte à côte,
- qui reposent du côté du bord en particulier sur une traverse intermédiaire (54) qui est fixée par ses extrémités aux traverses longitudinales (52) ou aux traverses transversales (53),
- en particulier, les bords (55a, c), voisins l'un de l'autre, des deux étagères (55.1, 55.2) voisines reposent sur la même traverse intermédiaire (54),
en particulier
- lesdites plusieurs étagères (55) à l'intérieur d'un polygone, en particulier à l'intérieur d'un quadrilatère, sont identiques au moins en ce qui concerne les repères de navigation (66),
- à l'exception tout au plus de la différence consistant en la présence d'évidements d'angle (67) dans les angles des étagères (55.1, 55.2) pour recevoir une partie de la section transversale d'un montant porteur (51).
